(19) Europäisches Patentamt
European Patent Office
Office européen des brevets

(11) **EP 1 890 172 A1**

(12) **EUROPEAN PATENT APPLICATION**
published in accordance with Art. 153(4) EPC

(43) Date of publication:
**20.02.2008 Bulletin 2008/08**

(51) Int Cl.:
*G02B 1/11* (2006.01)   *G09F 9/00* (2006.01)

(21) Application number: **06757221.4**

(22) Date of filing: **09.06.2006**

(86) International application number:
**PCT/JP2006/311598**

(87) International publication number:
**WO 2006/132351 (14.12.2006 Gazette 2006/50)**

(84) Designated Contracting States:
**DE ES IT**

(30) Priority: **09.06.2005 JP 2005170037**

(71) Applicants:
• **Hitachi Chemical Co., Ltd.**
**Tokyo 163-0449 (JP)**
• **MITSUBISHI DENKI KABUSHIKI KAISHA**
**Chiyoda-ku, Tokyo 100-8310 (JP)**

(72) Inventors:
• **OKANIWA, Kaoru, c/o High Performance**
**Materials**
**48, Wadai ,Tsukuba-shi Ibaraki 300-4247 (JP)**

• **ABE, Kouichi,**
**HITACHI CHEMICAL COMPANY LTD.**
**Hitachi-shi, Ibaraki 317-8555 (JP)**
• **SAKURAI, Haruaki,**
**HITACHI CHEMIMICAL COMPANY LTD.**
**Hitachi-shi, Ibaraki 317-8555 (JP)**
• **MORIKAWA, Hiroaki,**
**Mitsubushi Denki K. K.**
**Tokyo 100-8310 (JP)**

(74) Representative: **von Kreisler Selting Werner**
**Patentanwälte**
**Deichmannhaus am Dom**
**Bahnhofsvorplatz 1**
**50667 Köln (DE)**

(54) **METHOD FOR FORMING ANTIREFLECTION FILM**

(57) The invention provides a method for forming antireflection films comprising a step that simultaneously accomplishes sintering of a coating film containing an antireflection film precursor formed on the surface of a glass body, and tempering of the glass body. It is thereby possible to form antireflection films at satisfactorily low cost.

*Fig.1*

100

57 60

EP 1 890 172 A1

**Description**

**Technical Field**

The present invention relates to a method for forming an antireflection film.

**Background Art**

Glass or transparent plastic has conventionally been used as a transparent member material for optical parts, lenses, prisms, optical disks, camera lenses, eyeglasses, liquid crystal panels, plasma displays, cathode-ray tubes, displays, device meter hoods, solar cells, solar panels (solar cell modules), solar collectors, window glass, vehicle glass and show window glass. Antireflection films are often formed on the surfaces of such transparent members as antireflection layers. They may be formed by methods such as vapor deposition or dip coating of monolayer or multilayer films. On the other hand, some transparent members require tempering depending on their uses and purposes. Tempering is usually carried out especially for solar panel cover glass, construction glass, automobile glass and display glass.

For a satisfactory anti-reflection effect using a monolayer antireflection film, it is necessary for the refractive index of the antireflection film to be at a power of about 1/2 with respect to the refractive index of the transparent member. For example, the optical glass of a transparent member generally has a refractive index of 1.47-1.92. The refractive index of the antireflection film, therefore, must be about 1.21-1.38. $MgF_2$ exhibits the lowest refractive index among inorganic materials, but even its refractive index is about 1.38. Considering that the refractive index of most glass materials or transparent plastics is about 1.5, materials with lower refractive indexes are desirable.

Incidentally, CVD is the commonly adopted process for forming antireflection films composed mainly of inorganic materials. However when antireflection films are formed by CVD, which is a vacuum process, there are limits to increase in productivity and restrictions on the process are significant. Consequently, CVD cannot be considered practical, in terms of cost, for production of solar panel cover glass, construction glass and automobile glass.

In order to meet demands for antireflection films with low refractive indexes, attempts have been made to achieve a lower refractive index by forming pores in the antireflection film material (for example, see Patent documents 1-12).

[Patent document 1] Japanese Unexamined Patent Publication SHO No. 58-116507
[Patent document 2] Japanese Unexamined Patent Publication SHO No. 62-226840
[Patent document 3] Japanese Unexamined Patent Publication HEI No. 1-312501
[Patent document 4] Japanese Unexamined Patent Publication HEI No. 3-199043
[Patent document 5] Japanese Unexamined Patent Publication HEI No. 5-157902
[Patent document 6] Japanese Unexamined Patent Publication HEI No. 6-3501
[Patent document 7] Japanese Unexamined Patent Publication HEI No. 6-157076
[Patent document 8] Japanese Unexamined Patent Publication HEI No. 7-140303
[Patent document 9] Japanese Unexamined Patent Publication HEI No. 7-150356
[Patent document 10] Japanese Unexamined Patent Publication HEI No. 7-333403
[Patent document 11] Japanese Unexamined Patent Publication HEI No. 9-249411
[Patent document 12] Japanese Unexamined Patent Publication No. 2000-147750

**Disclosure of the Invention**

Problems to be Solved by the Invention

It is still expensive to obtain transparent members with antireflection films by the conventional methods for forming antireflection films, including those described in Patent documents 1-12, and therefore further cost reduction is desirable.

The present invention has been accomplished in light of the current circumstances described above, and its object is to provide a method for forming antireflection films that allows formation of antireflection films at satisfactorily low cost.

Means for Solving the Problems

In order to achieve the object stated above, the invention provides a method for forming antireflection films which comprises a step that simultaneously accomplishes sintering of a coating film containing an antireflection film precursor formed on the surface of a glass body, and tempering of the glass body. Thus, since a part of the step of forming the antireflection film also accomplishes tempering for the glass body according to the invention, it is possible to achieve significant cost reduction while also shortening the process.

According to the invention, the sintering and tempering are preferably carried out at 400-800°C. This will tend to allow lowering of the refractive index of the antireflection film while permitting more effective tempering of the glass body.

According to the invention, the antireflection film is preferably a silica-based film. The temperature suitable for sintering of the coating film of the silica-based film is the same or approximately the same as the temperature for tempering of the glass body. Consequently, using a silica-based film as the antireflection film can significantly reduce costs while easily further lowering the refractive index of the antireflection film. Furthermore, if the antireflection film is a porous silica-based film it is possible to lower the refractive index even further, and thereby improve the anti-reflection effect.

According to the invention, the coating film is preferably obtained by coating the surface of the glass body with a composition for forming a silica-based film containing component (a): a siloxane resin, component (b): a solvent capable of dissolving component (a), and component (c): an hardening accelerator catalyst, and drying it. An antireflection film obtained by further sintering the coating film can exhibit a particularly low refractive index compared to the antireflection films described in Patent documents 1-13. This is attributed to the fact that using an hardening accelerator catalyst together with a siloxane resin, which is a high-molecular-weight silica-based compound, causes the obtained antireflection film (silica-based coating) to possess a much larger number of sufficiently dense pores than conventional antireflection films.

## Effect of the Invention

According to the invention it is possible to provide a method for forming antireflection films whereby antireflection films can be formed at satisfactorily low cost.

## Brief Description of the Drawings

Fig. 1 is a schematic sectional view showing a laminated body comprising whiteboard tempered glass and an antireflection film according to the invention.

Fig. 2 is a graph showing the wavelength dependency of reflectance of an antireflection film (whiteboard tempered glass).

Fig. 3 is a schematic plan view of a silicon solar cell according to the invention.

Fig. 4 is a sectional process diagram showing the production steps for a silicon solar cell according to the invention.

Fig. 5 is a schematic diagram showing a mode for wiring connection between a plurality of solar cells according to the invention.

Fig. 6 is an oblique perspective schematic view of a solar cell module according to the invention.

Fig. 7 is a schematic sectional view of a portion of a solar cell module according to the invention.

Fig. 8 is a graph showing the wavelength dependency of reflectance of an antireflection film for an example of the invention.

Fig. 9 is a graph showing the wavelength dependency of reflectance of an antireflection film for an example of the invention.

Fig. 10 is a graph showing the wavelength dependency of reflectance of an antireflection film for an example of the invention.

Fig. 11 is a graph showing the wavelength dependency of reflectance of an antireflection film for an example of the invention.

Explanation of Symbols

1: Silicon substrate, 2: textured surface, 3: n-type layer, 4: antireflection film, 5: silver paste for front electrode, 6: aluminum paste for rear electrode, 7: front silver electrode (grid electrode), 8: rear aluminum electrode, 9: p+ layer, 10: front silver electrode (bus electrode), 11: rear silver electrode (bus electrode), 51: solar cell, 52a, 52b: tab electrodes, 53: back sheet, 54: side tab wiring, 55, 56: electrode tabs, 57: whiteboard tempered glass, 58: solar cell sealing material, 60: antireflection film, 100: laminated body, 600: solar cell module.

## Best Mode for Carrying Out the Invention

The method for forming an antireflection film according to the invention comprises a step that simultaneously accomplishes sintering of a coating film containing an antireflection film precursor formed on the surface of a glass body, and tempering of the glass body. Preferred modes of the invention will now be explained in detail, with reference to the accompanying drawings as necessary. Identical elements in the drawings will be referred to by like reference numerals and will be explained only once. The vertical and horizontal positional relationships are based on the positional relationships in the drawings, unless otherwise specified. Also, the dimensional proportions depicted in the drawings are not necessarily limitative. The term "(meth)acrylate" used throughout the present specification refers to the "acrylate" and its corresponding "methacrylate".

The method for formation of an antireflection film according to the embodiment comprises a coating step in which a composition for forming a silica-based film is coated onto the surface of a glass body to form a coating film, a solvent removal step in which the solvent in the coating film is removed, and a sintering and tempering step in which sintering of the coating film and tempering of the glass body are carried out simultaneously.

[Coating step]

The method of coating the composition for forming a silica-based film onto the surface of the glass body in the coating step is not particularly restricted and may be, for example, spin coating, brush coating, spray coating, slit coating, lip coating or a printing method.

The composition for forming a silica-based film used in the coating step is the precursor for the antireflection film, and contains the following components (a)-(c). The composition also may contain component (d) and/or other components as necessary.

<Component (a)>

Component (a) is a siloxane resin and any publicly known one may be used, but it is preferably one having OH groups at the ends or side chains of the resin. This can further promote the hydrolysis and condensation reaction for hardening of the composition for forming a silica-based film.

From the viewpoint of improving the solvent solubility, mechanical properties and moldability, the siloxane resin preferably has a weight-average molecular weight (Mw) of 500-1,000,000, more preferably 500-500,000, even more preferably 500-100,000, yet more preferably 500-10,000 and most preferably 500-5000. The weight-average molecular weight of less than 500 will tend to result in inferior film formability of the silica-based film while a weight-average molecular weight of greater than 1,000,000 will tend to result in poor compatibility with the solvent. The weight-average molecular weights referred to throughout the present specification were measured by gel permeation chromatography (hereinafter, "GPC") and calculated using a standard polystyrene calibration curve.

The weight-average molecular weight (Mw) can be measured by GPC under the following conditions, for example.

Sample: 10 $\mu$L composition for forming a silica-based film

Standard polystyrene: Standard polystyrene by Tosoh Corp. (molecular weights: 190,000,17900,9100,2980, 578,474,370,266).

Detector: RI-monitor by Hitachi, Ltd., trade name: "L-3000"

Integrator: GPC integrator by Hitachi, Ltd., trade name: "D-2200"

Pump: Trade name "L-6000" by Hitachi, Ltd.

Degassing apparatus: Trade name "Shodex DEGAS" by Showa Denko K.K.

Column: Trade names "GL-R440", "GL-R430" and "GL-R420" by Hitachi Chemical Co., Ltd., connected in that order.

Eluent: Tetrahydrofuran (THF)

Measuring temperature: 23°C

Flow rate: 1.75 mL/min.

Measuring time: 45 minutes

As examples of preferred siloxane resins there may be mentioned resins obtained by hydrolysis and condensation of compounds represented by the following general formula (1):

$$R^1_n SiX_{4-n} \qquad (1)$$

as essential components. In this formula, $R^1$ represents at least one group selected from among B atoms, N atoms, Al atoms, P atoms, Si atoms, Ge atoms and Ti atoms (with the exception of C1-20 organic groups), a C1-20 organic group, an H atom or an F atom, X represents a hydrolyzable group, n represents an integer of 0-2, and when n is 2 each $R^1$ may be the same or different and when n is 0-2, each X may be the same or different.

As examples of the hydrolyzable group X there may be mentioned alkoxy, aryloxy, halogen atoms, acetoxy, isocyanate and hydroxyl groups. Of these, alkoxy and aryloxy groups are preferred and alkoxy groups are especially preferred, from the standpoint of the liquid stability and coating characteristics of the composition itself.

When the hydrolyzable group X is an alkoxy group, the compound represented by general formula (1) (alkoxysilane) may be, for example, a tetraalkoxysilane, trialkoxysilane or dialkoxysilane, any of which may be optionally substituted.

As examples of tetraalkoxysilanes there may be mentioned tetramethoxysilane, tetraethoxysilane, tetra-n-propoxysilane, tetra-iso-propoxysilane, tetra-n-butoxysilane, tetra-sec-butoxysilane and tetra-tert-butoxysilane.

As examples of the trialkoxysilanes there may be mentioned trimethoxysilane, triethoxysilane, tripropoxysilane, fluorotrimethoxysilane, fluorotriethoxysilane, methyltrimethoxysilane, methyltriethoxysilane, methyltri-n-propoxysilane, methyltri-iso-propoxysilane, methyltri-n-butoxysilane, methyltri-iso-butoxysilane, methyltri-tert-butoxysilane, ethyltrimethoxysilane, ethyltriethoxysilane, ethyltri-n-propoxysilane, ethyltri-iso-propoxysilane, ethyltri-n-butoxysilane, ethyltri-iso-butoxysilane, ethyltri-tert-butoxysilane, n-propyltrimethoxysilane, n-propyltriethoxysilane, n-propyltri-n-propoxysilane, n-propyltri-iso-propoxysilane, n-propyltri-n-butoxysilane, n-propyltri-iso-butoxysilane, n-propyltri-tert-butoxysilane, iso-propyltrimethoxysilane, iso-propyltriethoxysilane, iso-propyltri-n-propoxysilane, iso-propyltri-iso-propoxysilane, iso-propyltri-n-butoxysilane, iso-propyltri-iso-butoxysilane, iso-propyltri-tert-butoxysilane, n-butyltrimethoxysilane, n-butyltriethoxysilane, n-butyltri-n-propoxysilane, n-butyltri-iso-propoxysilane, n-butyltri-n-butoxysilane, n-butyltri-iso-butoxysilane, n-butyltri-tert-butoxysilane, sec-butyltrimethoxysilane, sec-butyltriethoxysilane, sec-butyltri-n-propoxysilane, sec-butyltri-iso-propoxysilane, sec-butyltri-n-butoxysilane, sec-butyltri-iso-butoxysilane, sec-butyltri-tert-butoxysilane, t-butyltrimethoxysilane, t-butyltriethoxysilane, t-butyltri-n-propoxysilane, t-butyltri-iso-propoxysilane, t-butyltri-n-butoxysilane, t-butyltri-iso-butoxysilane, t-butyltri-tert-butoxysilane, phenyltrimethoxysilane, phenyltriethoxysilane, phenyltri-n-propoxysilane, phenyltri-iso-propoxysilane, phenyltri-n-butoxysilane, phenyltri-iso-butoxysilane, phenyltri-tert-butoxysilane, trifluoromethyltrimethoxysilane, pentafluoroethyltrimethoxysilane, 3,3,3-trifluoropropyltrimethoxysilane and 3,3,3-trifluoropropyltriethoxysilane.

As examples of dialkoxysilanes there may be mentioned dimethyldimethoxysilane, dimethyldiethoxysilane, dimethyldi-n-propoxysilane, dimethyldi-iso-propoxysilane, dimethyldi-n-butoxysilane, dimethyldi-sec-butoxysilane, dimethyldi-tert-butoxysilane, diethyldimethoxysilane, diethyldiethoxysilane, diethyldi-n-propoxysilane, diethyldi-iso-propoxysilane, diethyldi-n-butoxysilane, diethyldi-sec-butoxysilane, diethyldi-tert-butoxysilane, di-n-propyldimethoxysilane, di-n-propyldiethoxysilane, di-n-propyldi-n-propoxysilane, di-n-propyldi-iso-propoxysilane, di-n-propyldi-n-butoxysilane, di-n-propyldi-sec-butoxysilane, di-n-propyldi-tert-butoxysilane, di-iso-propyldimethoxysilane, di-iso-propyldiethoxysilane, di-iso-propyldi-n-propoxysilane, di-iso-propyldi-iso-propoxysilane, di-iso-propyldi-n-butoxysilane, di-iso-propyldi-sec-butoxysilane, di-iso-propyldi-tert-butoxysilane, di-n-butyldimethoxysilane, di-n-butyldiethoxysilane, di-n-butyldi-n-propoxysilane, di-n-butyldi-iso-propoxysilane, di-n-butyldi-n-butoxysilane, di-n-butyldi-sec-butoxysilane, di-n-butyldi-tert-butoxysilane, di-sec-butyldimethoxysilane, di-sec-butyldiethoxysilane, di-sec-butyldi-n-propoxysilane, di-sec-butyldi-iso-propoxysilane, di-sec-butyldi-n-butoxysilane, di-sec-butyldi-sec-butoxysilane, di-sec-butyldi-tert-butoxysilane, di-tert-butyldimethoxysilane, di-tert-butyldiethoxysilane, di-tert-butyldi-n-propoxysilane, di-tert-butyldi-iso-propoxysilane, di-tert-butyldi-n-butoxysilane, di-tert-butyldi-sec-butoxysilane, di-tert-butyldi-tert-butoxysilane, diphenyldimethoxysilane, diphenyldiethoxysilane, diphenyldi-n-propoxysilane, diphenyldi-iso-propoxysilane, diphenyldi-n-butoxysilane, diphenyldi-sec-butoxysilane, diphenyldi-tert-butoxysilane, bis(3,3,3-trifluoropropyl)dimethoxysilane and methyl(3,3,3-trifluoropropyl)dimethoxysilane.

When the hydrolyzable group X is an aryloxy group, the compound represented by general formula (1) may be, for example, a tetraaryloxysilane, triaryloxysilane or diaryloxysilane, any of which may be optionally substituted. Tetraphenoxysilane may be mentioned as an example of a tetraaryloxysilane. As examples of triaryloxysilanes there may be mentioned triphenoxysilane, methyltriphenoxysilane, ethyltriphenoxysilane, n-propyltriphenoxysilane, iso-propyltriphenoxysilane, sec-butyltriphenoxysilane, t-butyltriphenoxysilane and phenyltriphenoxysilane. As examples of diaryloxysilanes there may be mentioned dimethyldiphenoxysilane, diethyldiphenoxysilane, di-n-propyldiphenoxysilane, di-iso-propyldiphenoxysilane, di-n-butyldiphenoxysilane, di-sec-butyldiphenoxysilane, di-tert-butyldiphenoxysilane and diphenyldiphenoxysilane.

As examples of compounds represented by general formula (1) above wherein R[1] is a C1-20 organic group, in addition to the above, there may be mentioned bissilylalkanes such as bis(trimethoxysilyl)methane, bis(triethoxysilyl) methane, bis(tri-n-propoxysilyl)methane, bis(tri-iso-propoxysilyl)methane, bis(trimethoxysilyl)ethane, bis(triethoxysilyl) ethane, bis(tri-n-propoxysilyl)ethane, bis(tri-iso-propoxysilyl)ethane, bis(trimethoxysilyl)propane, bis(triethoxysilyl)propane, bis(tri-n-propoxysilyl)propane and bis(tri-iso-propoxysilyl)propane, and bissilylbenzenes such as bis(trimethoxysilyl)benzene, bis(triethoxysilyl)benzene, bis(tri-n-propoxysilyl)benzene and bis(tri-iso-propoxysilyl)benzene.

As examples of compounds represented by general formula (1) wherein R[1] is a group containing a Si atom there may be mentioned hexaalkoxydisilanes such as hexamethoxydisilane, hexaethoxydisilane, hexa-n-propoxydisilane and hexa-iso-propoxydisilane, and dialkyltetraalkoxydisilanes such as 1,2-dimethyltetramethoxydisilane, 1,2-dimethyltetraethoxydisilane and 1,2-dimethyltetrapropoxydisilane.

When the hydrolyzable group X is a halogen atom (halogen group), as examples of compounds represented by general formula (1) (halogenated silanes), there may be mentioned the aforementioned alkoxysilane molecules wherein the alkoxy groups are substituted with halogen atoms. As examples of compounds represented by general formula (1) wherein the hydrolyzable group X is an acetoxy group (acetoxysilanes), there may be mentioned the aforementioned alkoxysilane molecules wherein the alkoxy groups are substituted with acetoxy groups. As examples of compounds represented by general formula (1) wherein the hydrolyzable group X is an isocyanate group (isocyanatosilanes), there may be mentioned the aforementioned alkoxysilane molecules wherein the alkoxy groups are substituted with isocyanate groups. As examples of compounds represented by general formula (1) wherein the hydrolyzable group X is a hydroxyl group (hydroxysilanes), there may be mentioned the aforementioned alkoxysilane molecules wherein the alkoxy groups are substituted with hydroxyl groups.

These compounds represented by general formula (1) may be used alone or in combinations of two or more.

As siloxane resins, there may be used resins obtained by hydrolysis and condensation of partial condensates such as multimers of compounds represented by general formula (1), resins obtained by hydrolysis and condensation of partial condensates such as multimers of compounds represented by general formula (1) with compounds represented by general formula (1), resins obtained by hydrolysis and condensation of compounds represented by general formula (1) with other compounds, and resins obtained by hydrolysis and condensation of partial condensates such as multimers of compounds represented by general formula (1) with compounds represented by general formula (1) and other compounds.

As examples of partial condensates such as multimers of compounds represented by general formula (1) there may be mentioned hexaalkoxydisiloxanes such as hexamethoxydisiloxane, hexaethoxydisiloxane, hexa-n-propoxydisiloxane and hexa-iso-propoxydisiloxane, and partially condensed trisiloxanes, tetrasiloxanes, oligosiloxanes and the like.

As examples of the "other compounds" referred to above there may be mentioned compounds with polymerizable double bonds or triple bonds. As examples of compounds with polymerizable double bonds there may be mentioned ethylene, propylene, isobutene, butadiene, isoprene, vinyl chloride, vinyl acetate, vinyl propionate, vinyl caproate, vinyl stearate, methylvinyl ether, ethylvinyl ether, propylvinyl ether, acrylonitrile, styrene, methacrylic acid, methyl methacrylate, ethyl methacrylate, n-propyl methacrylate, iso-propyl methacrylate, n-butyl methacrylate, acrylic acid, methyl acrylate, ethyl acrylate, phenyl acrylate, vinylpyridine, vinylimidazole, acrylamide, allylbenzene and diallylbenzene, as well as partially condensed forms of these compounds. As compounds with triple bonds there may be mentioned acetylene and ethynylbenzene.

Siloxane resins obtained in this manner may be used alone or in combinations of two or more.

The amount of water used for hydrolysis and condensation of a compound represented by general formula (1) is preferably 0.1-1000 mol and more preferably 0.5-100 mol per mole of the compound represented by general formula (1). If the amount of water is less than 0.1 mol the hydrolysis and condensation reaction will tend not to proceed sufficiently, while if the amount of water exceeds 1000 mol, gelled substances will tend to be produced during hydrolysis or during condensation.

A catalyst is also preferably used during the hydrolysis and condensation of the compound represented by general formula (1). As examples of such catalysts there may be mentioned acid catalysts, alkali catalysts and metal chelate compounds.

As examples of acid catalysts there may be mentioned organic acids and inorganic acids. As examples of organic acids there may be mentioned formic acid, maleic acid, fumaric acid, phthalic acid, malonic acid, succinic acid, tartaric acid, malic acid, lactic acid, citric acid, acetic acid, propionic acid, butanoic acid, pentanoic acid, hexanoic acid, heptanoic acid, octanoic acid, nonanoic acid, decanoic acid, oxalic acid, adipic acid, sebacic acid, butyric acid, oleic acid, stearic acid, linolic acid, linoleic acid, salicylic acid, benzenesulfonic acid, benzoic acid, p-aminobenzoic acid, p-toluenesulfonic acid, methanesulfonic acid, trifluoromethanesulfonic acid and trifluoroethanesulfonic acid. As examples of inorganic acids there may be mentioned hydrochloric acid, phosphoric acid, nitric acid, boric acid, sulfuric acid and hydrofluoric acid. Of these, maleic acid is preferred as an organic acid and nitric acid is preferred as an inorganic acid. These acid catalysts may be used alone or in combinations of two or more.

As examples of alkali catalysts there may be mentioned inorganic alkalis and organic alkalis. As examples of inorganic alkalis there may be mentioned sodium hydroxide, potassium hydroxide, rubidium hydroxide and cesium hydroxide. As examples of organic alkalis there may be mentioned pyridine, monoethanolamine, diethanolamine, triethanolamine, dimethylmonoethanolamine, monomethyldiethanolamine, ammonia, tetramethylammonium hydroxide, tetraethylammonium hydroxide, tetrapropylammonium hydroxide, methylamine, ethylamine, propylamine, butylamine, pentylamine, hexylamine, heptylamine, octylamine, nonylamine, decylamine, undecylamine, dodecylamine, cyclopentylamine, cyclohexylamine, N,N-dimethylamine, N,N-diethylamine, N,N-dipropylamine, N,N-dibutylamine, N,N-dipentylamine, N,N-dihexylamine, N,N-dicyclopentylamine, N,N-dicyclohexylamine, trimethylamine, triethylamine, tripropylamine, tributylamine, tripentylamine, trihexylamine, tricyclopentylamine and tricyclohexylamine. These alkali catalysts may also be used alone or in combinations of two or more.

Any metal chelate compounds comprising metals and multidentate ligands may be used without any particular restrictions, and they may also contain organic groups. As examples of metals in metal chelate compounds there may be mentioned titanium, zirconium, aluminum and the like. As examples of multidentate ligands there may be mentioned acetylacetonate ion and ethyl acetoacetate. As examples of organic groups there may be mentioned alkoxy groups such as methoxy, ethoxy, n-propoxy, iso-propoxy, n-butoxy, sec-butoxy and tert-butoxy groups. As specific examples of metal chelate compounds there may be mentioned titanium-containing metal chelate compounds such as trimethoxy·mono(acetylacetonato)titanium, triethoxy·mono(acetylacetonato)titanium, tri-n-propoxy·mono(acetylacetonato)titanium, tri-iso-propoxy·mono(acetylacetonato)titanium, tri-n-butoxy·mono(acetylacetonato)titanium, tri-sec-butoxy·mono(acetylacetonato)titanium, tri-tert-butoxy·mono(acetylacetonato)titanium, dimethoxy·di(acetylacetonato)titanium, diethoxy·di(acetylacetonato)titanium, din-propoxy·di(acetylacetonato)titanium, di-iso-propoxy·di(acetylacetonato)titanium, din-butoxy·di(acetylacetonato)titanium, d-sec-butoxy·di(acetylacetonato)titanium, di-tert-butoxy·di(acetylacetonato)titanium, monomethoxy·tris(acetylacetonato)titanium, monoethoxy·tris(acetylacetonato)titanium, mono-n-propoxy·tris(acetylacetonato)titanium, mono-iso-propoxy·tris(acetylacetonato)titanium, mono-n-butoxy·tris(acetylacetonato)titanium, mono-sec-butoxy·tris(acetylacetonato)titanium, mono-tert-butoxy·tris(acetylacetonato)titanium, tetrakis(acetylacetonato)titanium, titanium trimethoxy·mono(ethyl acetoacetate), titanium triethoxy·mono(ethyl acetoacetate), titanium tri-n-propoxy·mono(ethyl acetoacetate), titanium tri-iso-propoxy·mono(ethyl acetoacetate), titanium tri-n-butoxy·mono(ethyl acetoacetate), titanium tri-sec-butoxy·mono(ethyl acetoacetate), titanium tri-tert-butoxy·mono(ethyl acetoacetate), titanium dimethoxy·di(ethyl acetoacetate), titanium diethoxy·di(ethyl acetoacetate), titanium din-propoxy-di(ethyl acetoacetate), titanium di-iso-propoxy·di(ethyl acetoacetate), titanium di-n-butoxy·di(ethyl acetoacetate), titanium di-sec-butoxy·di(ethyl acetoacetate), titanium di-tert-butoxy·di(ethyl acetoacetate), titanium monomethoxy·tris(ethyl acetoacetate), titanium monoethoxy·tris(ethyl acetoacetate), titanium mono-n-propoxy·tris(ethyl acetoacetate), titanium mono-iso-propoxy·tris (ethyl acetoacetate), titanium mono-n-butoxy·tris(ethyl acetoacetate), titanium mono-sec-butoxy·tris(ethyl acetoacetate), titanium mono-tert-butoxy·tris(ethyl acetoacetate) and titanium tetrakis(ethyl acetoacetate), as well as the aforementioned titanium-containing metal chelate compounds wherein the titanium is replaced with zirconium, aluminum or the like. These may be used alone or in combinations of two or more.

The aforementioned catalyst is also preferably used for hydrolysis in the hydrolysis and condensation of the compound represented by general formula (1). However, including a catalyst in a composition for forming a silica-based film may impair the stability of the composition and/or may corrode or otherwise affect the other materials. In such cases, the hydrolysis may be followed by, for example, removal of the catalyst from the composition or reaction with other compounds to deactivate the catalyst function. There are no particular restrictions on the method of removing or reacting the catalyst, and removal may be accomplished by distillation or using a column of ion chromatography. The hydrolysis product obtained from the compound represented by general formula (1) may also be removed from the composition by reprecipitation or the like. The method of deactivating the function of the catalyst by reaction, for example when the catalyst is an alkali catalyst, may be a method of adding an acid catalyst for neutralization by acid-base reaction or adjustment of the pH to the acidic end. Similarly, when the catalyst is an acid catalyst, there may be mentioned a method of adding an alkali catalyst for neutralization by acid-base reaction or adjustment of the pH to the alkali end.

The amount of catalyst used is preferably in the range of 0.0001-1 mol with respect to 1 mole of the compound represented by general formula (1). If the amount is less than 0.0001 mol, the reaction will tend not to proceed substantially, while if the amount exceeds 1 mol, gelling will tend to be promoted during the hydrolysis and condensation.

The alcohol of by-product from the hydrolysis is a protic solvent, and is therefore preferably removed using an evaporator or the like.

From the viewpoint of the solvent solubility, mechanical properties and moldability, the resin obtained in the manner described above preferably has a weight-average molecular weight of 500-1,000,000, more preferably 500-500,000, even more preferably 500-100,000, yet more preferably 500-10,000 and most preferably 500-5000. A weight-average molecular weight of less than 500 will tend to result in inferior film formability of the antireflection film, while a weight-average molecular weight of greater than 1,000,000 will tend to result in poor compatibility with the solvent.

When the composition for forming a silica-based film requires mechanical strength and adhesion onto the base layer on which it is coated, the total number of one or more atoms selected from the group consisting of H atoms, F atoms, B atoms, N atoms, Al atoms, P atoms, Si atoms, Ge atoms, Ti atoms and C atoms that are bonded to each Si atom forming the siloxane bond of the siloxane resin (defined as the total number of specified bonding atoms ($R^1$ in general formula (1)), (M)) is preferably 1.30-0.20, more preferably 1.00-0.20, even more preferably 0.90-0.20 and most preferably 0.80-0.20. This can prevent reduction in adhesion to glass bodies and the like and in mechanical strength of the silica-based film

If the total number of specified bonding atoms (M) is less than 0.20, the dielectric characteristic of the silica-based film will tend to be inferior, while if it is greater than 1.30, the adhesion to glass bodies and the like and the mechanical strength of the finally obtained antireflection film will tend to be inferior. Among the specified bonding atoms mentioned above, the composition preferably contains one or more atoms selected from the group consisting of H atoms, F atoms, N atoms, Si atoms, Ti atoms and C atoms, from the viewpoint of the film formability of the silica-based film, and from the viewpoint of the dielectric characteristic and mechanical strength, it preferably contains one or more atoms selected from the group consisting of H atoms, F atoms, N atoms, Si atoms and C atoms.

The total number of specified bonding atoms (M) may be determined from the charging weight of the siloxane resin, and for example, it may be calculated by the relationship represented by the following formula (A):

$$M = (M1 + (M2/2) + (M3/3))/Msi : \quad (A).$$

In this formula, M1 represents the total number of atoms bonding to a single (i.e. one) Si atom among the specified bonding atoms, M2 represents the total number of atoms bonding to two Si atoms among the specified bonding atoms, M3 represents the total number of atoms bonding to three Si atoms among the specified bonding atoms, and Msi represents the total number of Si atoms.

Such siloxane resins may be used alone or in combinations of two or more. As examples of methods for combining two or more siloxane resins there may be mentioned a method of combining two or more siloxane resins with different weight-average molecular weights, and a method of combining two or more siloxane resins obtained by hydrolysis and condensation of different compounds as essential components.

<Component (b)>

Component (b) is not particularly restricted so long as it is a solvent that can dissolve component (a). As examples for component (b) there may be mentioned aprotic solvents that are not proton donors and protic solvents that are proton donors. These may be used alone or in combinations of two or more.

As examples of aprotic solvents there may be mentioned ketone-based solvents such as acetone, methyl ethyl ketone, methyl n-propyl ketone, methyl iso-propyl ketone, methyl n-butyl ketone, methyl iso-butyl ketone, methyl n-pentyl ketone, methyl n-hexyl ketone, diethyl ketone, dipropyl ketone, di-iso-butyl ketone, trimethylnonanone, cyclohexanone, cyclopentanone, methylcyclohexanone, 2,4-pentanedione, acetonylacetone, γ-butyrolactone and γ-valerolactone; ether-based solvents such as diethyl ether, methyl ethyl ether, methyl-n-di-n-propyl ether, di-iso-propyl ether, tetrahydrofuran, methyltetrahydrofuran, dioxane, dimethyldioxane, ethyleneglycol dimethyl ether, ethyleneglycol diethyl ether, ethyleneglycol di-n-propyl ether, ethyleneglycol dibutyl ether, diethyleneglycol dimethyl ether, diethyleneglycol diethyl ether, diethyleneglycolmethyl ethyl ether, diethyleneglycolmethyl mono-n-propyl ether, diethyleneglycolmethyl mono-n-butyl ether, diethyleneglycol di-n-propyl ether, diethyleneglycol di-n-butyl ether, diethyleneglycolmethyl mono-n-hexyl ether, triethyleneglycol dimethyl ether, triethyleneglycol diethyl ether, triethyleneglycolmethyl ethyl ether, triethyleneglycolmethyl mono-n-butyl ether, triethyleneglycol din-butyl ether, triethyleneglycolmethyl mono-n-hexyl ether, tetraethyleneglycol dimethyl ether, tetraethyleneglycol diethyl ether, tetradiethyleneglycolmethyl ethyl ether, tetraethyleneglycolmethyl mono-n-butyl ether, diethyleneglycol di-n-butyl ether, tetraethyleneglycolmethyl mono-n-hexyl ether, tetraethyleneglycol din-butyl ether, propyleneglycol dimethyl ether, propyleneglycol diethyl ether, propyleneglycol di-n-propyl ether, propyleneglycol dibutyl ether, dipropyleneglycol dimethyl ether, dipropyleneglycol diethyl ether, dipropyleneglycolmethyl ethyl ether, dipropyleneglycolmethyl mono-n-butyl ether, dipropyleneglycol di-n-propyl ether, dipropyleneglycol di-n-butyl ether, dipropyleneglycolmethyl mono-n-hexyl ether, tripropyleneglycol dimethyl ether, tripropyleneglycol diethyl ether, tripropyleneglycolmethyl ethyl ether, tripropyleneglycolmethyl mono-n-butyl ether, tripropyleneglycol di-n-butyl ether, tripropyleneglycolmethyl mono-n-hexyl ether, tetrapropyleneglycol dimethyl ether, tetrapropyleneglycol diethyl ether, tetradipropyleneglycolmethyl ethyl ether, tetrapropyleneglycolmethyl mono-n-butyl ether, dipropyleneglycol di-n-butyl ether, tetrapropyleneglycolmethyl mono-n-hexyl ether and tetrapropyleneglycol di-n-butyl ether; ester-based solvents such as methyl acetate, ethyl acetate, n-propyl acetate, i-propyl acetate, n-butyl acetate, i-butyl acetate, sec-butyl acetate, n-pentyl acetate, sec-pentyl acetate, 3-methoxybutyl acetate, methylpentyl acetate, 2-ethylbutyl acetate, 2-ethylhexyl acetate, benzyl acetate, cyclohexyl acetate, methylcyclohexyl acetate, nonyl acetate, methyl acetoacetate, ethyl acetoacetate, diethyleneglycol monomethyl ether acetate, diethyleneglycolmonoethyl ether acetate, diethyleneglycolmono-n-butyl ether acetate, dipropyleneglycolmonomethyl ether acetate, dipropyleneglycolmonoethyl ether acetate, glycol diacetate, methoxytriglycol acetate, ethyl propionate, n-butyl propionate, i-amyl propionate, diethyl oxalate and di-n-butyl oxalate; ether acetate-based solvents such as ethyleneglycolmethyl ether propionate, ethyleneglycolethyl ether propionate, ethyleneglycolmethyl ether acetate, ethyleneglycolethyl ether acetate, diethyleneglycolmethyl ether acetate, diethyleneglycolethyl ether acetate, diethyleneglycol-n-butyl ether acetate, propyleneglycolmethyl ether acetate, propyleneglycolethyl ether acetate, propyleneglycolpropyl ether acetate, dipropyleneglycolmethyl ether acetate and dipropyleneglycolethyl ether acetate; and acetonitrile, N-methylpyrrolidinone, N-ethylpyrrolidinone, N-propylpyrrolidinone, N-butylpyrrolidinone, N-hexylpyrrolidinone, N-cyclohexylpyrrolidinone, N,N-dimethylformamide, N,N-dimethylacetamide, N,N-dimethyl sulfoxide, and the like.

Of these aprotic solvents, it is preferred to use one or more solvents selected from the group consisting of ether-based solvents, ether acetate-based solvents and ketone-based solvents, from the viewpoint of forming thick films. Of these, ether acetate-based solvents are preferred firstly, ether-based solvents are preferred secondly and ketone-based solvents are preferred thirdly, from the viewpoint of preventing unevenness and repelling of application. These may be used alone or in combinations of two or more.

As examples of protic solvents there may be mentioned alcohol-based solvents such as methanol, ethanol, n-propanol, i-propanol, n-butanol, i-butanol, sec-butanol, t-butanol, n-pentanol, i-pentanol, 2-methylbutanol, sec-pentanol, t-pentanol, 3-methoxybutanol, n-hexanol, 2-methylpentanol, sec-hexanol, 2-ethylbutanol, sec-heptanol, n-octanol, 2-ethylhexanol, sec-octanol, n-nonyl alcohol, n-decanol, sec-undecyl alcohol, trimethylnonyl alcohol, sec-tetradecyl alcohol, sec-heptadecyl alcohol, phenol, cyclohexanol, methylcyclohexanol, benzyl alcohol, ethylene glycol, 1,2-propylene glycol, 1,3-butylene glycol, diethylene glycol, dipropylene glycol, triethylene glycol and tripropylene glycol; ether-based solvents such as ethyleneglycol methyl ether, ethyleneglycol ethyl ether, ethyleneglycol monophenyl ether, diethyleneglycol monomethyl ether, diethyleneglycol monoethyl ether, diethyleneglycol mono-n-butyl ether, diethyleneglycol mono-n-hexyl ether, ethoxytriglycol, tetraethyleneglycol mono-n-butyl ether, propyleneglycol monomethyl ether, dipropyleneglycol monomethyl ether, dipropyleneglycol monoethyl ether and tripropyleneglycol monomethyl ether; and ester-based solvents such as methyl lactate, ethyl lactate, n-butyl lactate and n-amyl lactate.

Alcohol-based solvents are preferred among these protic solvents from the viewpoint of storage stability. Of these, it is preferred to use one or more solvents selected from the group consisting of ethanol, isopropyl alcohol and propyleneglycol propyl ether from the viewpoint of preventing unevenness and repelling of application.

These solvents may be used alone or in combinations of two or more.

The mixing proportion of the aprotic solvent is preferably 70 % by mass-90 % by mass, more preferably 75 % by mass-85 % by mass and even more preferably 73 % by mass-83 % by mass with respect to the total solvent in the composition for forming a silica-based film.

A mixing proportion of less than 70 % by mass will tend to create unevenness of application, while a proportion of greater than 90 % by mass will tend to reduce the stability.

The mixing proportion of the protic solvent is preferably 0.1 % by mass-15 % by mass, more preferably 0.5 % by mass-10 % by mass and even more preferably 1.0 % by mass-7 % by mass with respect to the total solvent of the composition for forming a silica-based film.

A mixing proportion of less than 0.1 % by mass will tend to reduce the stability, while a proportion of greater than 15 % by mass will tend to create unevenness of application.

The method of mixing component (b) with the composition for forming a silica-based film is not particularly restricted. As examples of mixing methods there may be mentioned a method of using it as a solvent for preparation of component (a), a method of adding it after preparation of component (a), a method involving solvent exchange, and a method of adding component (b) after removing component (a) by solvent distillation or the like.

The mixing proportion of solvents (total of aprotic and protic solvents) in the composition for forming a silica-based film is an amount such that the concentration of component (a) (siloxane resin) in the composition for forming a silica-based film is 5-30 % by mass, more preferably 10-30 % by mass, even more preferably 13-30 % by mass, yet more preferably 15-30 % by mass and most preferably 15-25 % by mass. If the amount of solvent is too high such that the concentration of component (a) is less than 5 % by mass, it will tend to be difficult to form a silica-based film with the desired film thickness. If the amount of solvent is too low such that the concentration of component (a) is greater than 30 % by mass, the film formability of the silica-based film will tend to be impaired while the stability of the composition itself will tend to be reduced.

<Component (c)>

Component (c) is a hardening accelerator catalyst.

The hardening accelerator catalyst is a specific compound that does not exhibit catalyst activity in solution but exhibits activity in the coated film after coating. The hardening accelerator catalyst is not particularly restricted so long as it has hardening accelerator catalyst power.

The hardening accelerator catalyst power of a hardening accelerator catalyst may be determined by the following steps 1-4.

1. First, a composition comprising component (a) and component (c) is prepared.

2. Next, the prepared composition is coated onto a silicon wafer to a post-baking (post-firing) film thickness of 1.0 ±0.1 $\mu$m. The coated composition is then baked for 30 seconds at a prescribed temperature and the film thickness of the obtained film is measured. The film thickness of 1.0 ±0.1 $\mu$m is satisfactory.

3. Next, the film-laminated silicon wafer is immersed for 30 seconds in a 2.38 % by mass tetramethylammonium hydroxide (TMAH) aqueous solution at 23 ±2°C and then rinsed and dried prior to a second measurement of the film thickness. Here, the minimum temperature during baking at which the change in film thickness before and after immersion in the TMAH aqueous solution is within 20% with respect to the film thickness before immersion, is recorded as the non-dissolving temperature.

4. A compound that is to be examined for hardening accelerator catalyst power is then added to the composition comprising components (a) and (c) to 0.01 % by mass with respect to the total of component (a), to obtain a new composition. The obtained composition is treated in the same manner as 2. and 3. above, and the non-dissolving temperature of the new composition is determined.

If addition of the compound to be examined for hardening accelerator catalyst power lowers the non-dissolving temperature of the composition, that compound is judged to have hardening accelerator catalyst power.

As examples of hardening accelerator catalysts for component (c) there may be mentioned alkali metal and onium salts with hardening accelerator catalyst power, such as sodium hydroxide, sodium chloride, potassium hydroxide and potassium chloride. These may be used alone or in combinations of two or more.

Among them, onium salts with hardening accelerator catalyst power are preferred and quaternary ammonium salts with hardening accelerator catalyst power are more preferred, from the viewpoint of improving the electrical characteristics and mechanical strength of the obtained silica-based film and increasing the stability of the composition.

As an example of one kind of onium salt there may be mentioned salts formed from nitrogen-containing compounds and at least one selected from among anionic group-containing compounds and halogen atoms. The atom bonded to the nitrogen of the nitrogen-containing compound is preferably at least one atom selected from the group consisting of H atoms, F atoms, B atoms, N atoms, Al atoms, P atoms, Si atoms, Ge atoms, Ti atoms and C atoms. As examples of anionic groups there may be mentioned hydroxyl, nitric acid, sulfuric acid, carbonyl, carboxyl, carbonate and phenoxy groups.

As examples of onium salts there may be mentioned ammonium salts such as ammonium hydroxide, ammonium fluoride, ammonium chloride, ammonium bromide, ammonium iodide, ammonium phosphate, ammonium nitrate, ammonium borate, ammonium sulfate, ammonium formate, ammonium malate, ammonium fumarate, ammonium phthalate, ammonium malonate, ammonium succinate, ammonium tartrate, ammonium malate, ammonium lactate, ammonium citrate, ammonium acetate, ammonium propionate, ammonium butanoate, ammonium pentanoate, ammonium hexanoate, ammonium heptanoate, ammonium octanoate, ammonium nonanoate, ammonium decanoate, ammonium oxalate, ammonium adipate, ammonium sebacate, ammonium butyrate, ammonium oleate, ammonium stearate, ammonium linolate, ammonium linoleate, ammonium salicylate, ammonium benzenesulfonate, ammonium benzoate, ammonium p-aminobenzoate, ammonium p-toluenesulfonate, ammonium methanesulfonate, ammonium trifluoromethanesulfonate and ammonium trifluoroethanesulfonate.

There may also be mentioned the aforementioned ammonium salts wherein the ammonium ion is replaced with methylammonium ion, dimethylammonium ion, trimethylammonium ion, tetramethylammonium ion, ethylammonium ion, diethylammonium ion, triethylammonium ion, tetraethylammonium ion, propylammonium ion, dipropylammonium ion, tripropylammonium ion, tetrapropylammonium ion, butylammonium ion, dibutylammonium ion, tributylammonium ion, tetrabutylammonium ion, ethanolammonium ion, diethanolammonium ion, triethanolammonium ion or the like.

Preferred of these onium salts, from the standpoint of accelerating hardening of the silica-based film, are ammonium salts, among which one or more ammonium salts selected from the group consisting of tetramethylammonium nitrate, tetramethylammonium acetate, tetramethylammonium propionate, tetramethylammonium malate and tetramethylammonium sulfate are more preferred.

These ammonium salts may be used alone or in combinations of two or more.

The mixing proportion of component (c) is preferably 0.0010-1.0 part by mass, more preferably 0.0050-1.0 part by mass and even more preferably 0.0050-0.50 part by mass with respect to 100 parts by mass of component (a) in the composition for forming a silica-based film. If the mixing proportion is less than 0.0010 part by mass the curability will tend to be reduced, and the refractive index of the antireflection film will tend to be higher when the composition is used for displays and the like. If the mixing proportion is greater than 1.0 part by mass, on the other hand, the storage stability of the composition for forming a silica-based film will tend to be reduced.

The onium salt can be adjusted to the desired concentration by adding it to the composition for forming a silica-based film after dissolution or dilution with water or a solvent as necessary. There are no particular restrictions on the timing for addition of the onium salt to the composition for forming a silica-based film. The timing may be, for example, at the start of hydrolysis of component (a), during the hydrolysis, upon completion of the reaction, before or after solvent distillation, or during addition of an acid generator.

The composition for forming a silica-based film of this mode may contain water if necessary, but preferably in a range that does not interfere with the desired properties.

<Component (d)>

The composition for forming a silica-based film of this mode may contain another component (d): a void-forming agent, in addition to components (a)-(c) described above. This will tend to allow lowering of the refractive index of the antireflection film.

As specific examples of void-forming agents there may be mentioned vinyl ether-based compounds, vinyl-based compounds with polyoxyalkylene units such as polyoxyethylene units and/or polyoxypropylene units, or compounds with polyoxyalkylene units that are polymers of the above, as well as vinylpyridine-based compounds, styrene-based compounds, alkyl ester vinyl-based compounds, (meth)acrylate-based compounds, polyesters, polycarbonates, polyanhydrides and the like. Among these, polymers with polyoxyalkylene units are preferred and polymers with polyoxypropylene units are especially preferred from the viewpoint of dissolving characteristics of the polymer and mechanical strength of the film.

As examples of polyoxyalkylene units there may be mentioned polyoxyethylene units, polyoxypropylene units, polyoxytetramethylene units and polyoxybutylene units.

As more specific examples of compounds with polyoxyalkylene units there may be mentioned ether compounds such as polyoxyethylenealkyl ethers, polyoxyethylenesterol ethers, polyoxyethylenelanolin derivatives, ethylene oxide derivatives of alkylphenolformalin condensation products, polyoxyethylenepolyoxypropylene block copolymer, polyoxypropylenealkyl ethers and polyoxyethylenepolyoxypropylenealkyl ethers; ether ester compounds such as polyoxyethyleneglycerin fatty acid esters, polyoxyethylenesorbitol fatty acid esters and polyoxyethylene fatty acidalkanolamidesulfuric acid salts; ester compounds such as polyethyleneglycol fatty acid esters, ethyleneglycol fatty acid esters, fatty acid monoglycerides, polyglycerin fatty acid esters, sorbitan fatty acid esters and propyleneglycol fatty acid esters; and glycol compounds such as ethylene glycol, diethylene glycol, triethylene glycol, propylene glycol, polyethylene glycol and polypropylene glycol.

As examples of (meth)acrylate-based compounds there may be mentioned alkyl acrylate esters, alkyl methacrylate esters, alkoxyalkyl acrylate esters, alkyl methacrylate esters and alkoxyalkyl methacrylate esters. As examples of alkyl acrylate esters there may be mentioned C1-6 alkyl acrylate esters such as methyl acrylate, ethyl acrylate, n-propyl acrylate, isopropyl acrylate, n-butyl acrylate, isobutyl acrylate, pentyl acrylate and hexyl acrylate. As examples of alkyl methacrylate esters there may be mentioned C1-6 alkyl methacrylate esters such as methyl methacrylate, ethyl methacrylate, n-propyl methacrylate, isopropyl methacrylate, n-butyl methacrylate, isobutyl methacrylate, pentyl methacrylate and hexyl methacrylate. As examples of alkoxyalkyl acrylate esters there may be mentioned methoxymethyl acrylate and ethoxyethyl acrylate. As alkoxyalkyl methacrylate esters there may be mentioned methoxymethyl methacrylate and ethoxyethyl methacrylate.

When a (meth)acrylate-based compound is used, it may be a copolymer with a hydroxyl group-containing compound. As examples of hydroxyl group-containing compounds there may be mentioned 2-hydroxyethyl acrylate, diethyleneglycol acrylate, 2-hydroxypropyl acrylate, dipropyleneglycol acrylate, methacrylic acid, 2-hydroxyethyl methacrylate, diethyleneglycol methacrylate, 2-hydroxypropyl methacrylate and dipropyleneglycol methacrylate.

As examples of polyesters there may be mentioned polycondensates of hydroxycarboxylic acid, lactone ring-opening polymers and polycondensates of aliphatic polyols and aliphatic polycarboxylic acids.

As examples of polycarbonates there may be mentioned polycondensates of carbonic acid and alkylene glycols, such as polyethylene carbonate, polypropylene carbonate, polytrimethylene carbonate, polytetramethylene carbonate, polypentamethylene carbonate and polyhexamethylene carbonate.

As polyanhydrides there may be mentioned polycondensates of dicarboxylic acids, such as polymalonyl oxide, polyadipoyl oxide, polypimeloyl oxide, polysuberoyl oxide, polyazelayl oxide and polysebacoyl oxide.

From the viewpoint of improving the solvent solubility, compatibility with the siloxane resin, mechanical properties of the film and moldability of the film, the void-forming agent preferably has a weight-average molecular weight (Mw) of 200-10,000, more preferably 300-5000 and even more preferably 400-2000. The weight-average molecular weight referred to here is the value measured by gel permeation chromatography (GPC) and calculated using a standard polystyrene calibration curve.

The mixing proportion of component (d) is preferably 0.1-10 % by mass and more preferably 1-5 % by mass with respect to the total weight of the composition for forming a silica-based film. If the mixing proportion is less than 0.1 % by mass, the void formation will tend to be insufficient. If it is greater than 10 % by mass, on the other hand, the film strength may be reduced.

(Other components)

A surfactant, silane coupling agent, thickening agent, inorganic filler or the like may also be added to the composition for forming a silica-based film of this mode, in a range such that the object and effect of the invention are not compromised. A void-forming property may also be imparted to the siloxane resin used as component (a). In addition, a photoacid generator or photobase generator may further be included in the composition for forming a silica-based film.

The film thickness of the silica-based film can be adjusted by, for example, modifying the concentration of component (a) in the composition for forming a silica-based film. When a spin coating method is used, the film thickness can be modified by adjusting the number of revolutions and the number of applications. When the concentration of component (a) is modified to control the film thickness, for example, the concentration of component (a) may be increased for a greater film thickness or the concentration of component (a) may be decreased for a smaller film thickness. When a spin coating method is used to prepare the film thickness, for example, a greater film thickness can be obtained by lowering the number of revolutions or increasing the number of applications. A smaller film thickness can be obtained by increasing the number of revolutions or decreasing the number of applications.

[Solvent removal step]

The solvent removal (drying) in the solvent removal step is not particularly restricted so long as it is carried out at a temperature that allows removal of the solvent, which will differ depending on the type of solvent. The solvent removal temperature is preferably 50-350°C and more preferably 100-300°C. At a temperature of below 50°C it will tend to be difficult to sufficiently remove the solvent in the coating film, while at a temperature of above 350°C the film thickness will tend to become nonuniform.

The solvent removal may be accomplished, for example, by setting the coating film-formed glass body on a hot plate, or placing the coating film-formed glass body in a heating furnace, and heating it to the prescribed temperature. However, the method of removing the solvent is not limited to such methods.

The solvent removal step may even be omitted, depending on the conditions for the sintering and tempering step described hereunder.

[Sintering and tempering step]

The sintering and tempering step includes at least sintering of the coating film obtained from the solvent removal step and tempering of the glass body, carried out simultaneously. An example of this step using a glass plate as the glass body will now be explained.

First, the composition for forming a silica-based film is coated onto the main side of a glass plate with an appropriate thickness to obtain a coating film, with removal of the solvent in the coating film if necessary, to prepare a laminated body. The laminated body is then placed in a heating furnace. The heat treatment is a single step including sintering of the coating film and tempering of the glass plate.

The heating temperature is preferably about 300-800°C, more preferably about 400-800°C, even more preferably about 400-700°C, yet more preferably about 450-650°C and most preferably about 500-600°C. If the heating temperature is below 300°C it will not reach the strain point of the glass, tending to hamper tempering of the glass. A heating temperature of greater than 800°C will tend to produce an antireflection film lacking most of the organic groups. Consequently, the antireflection film will tend to undergo deterioration in reliability tests such as a constant temperature and humidity test under conditions of 85°C, 85% RH, for example.

In order to inhibit warping of the laminated body after the sintering and tempering step, the heating time during the sintering and tempering step may be shortened or the heating temperature may be lowered. Also, the glass plate is preferably further tempered by setting the heating temperature in a range from a temperature 150°C lower than the softening point specified by JIS R3103-1 for glass plate materials, to a temperature 150°C higher than that softening point. The heating temperature is more preferably in a range from a temperature 100°C lower than the aforementioned softening point to a temperature 100°C higher than the softening point, even more preferably in a range from a temperature 70°C lower than the softening point to a temperature 70°C higher than the softening point, and most preferably in a range from a temperature 50°C lower than the softening point to a temperature 50°C higher than the softening point.

When the glass body (glass plate) does not require tempering and an antireflection effect is desired, the heating temperature may be 300-500°C.

The heat treated laminated body is removed from the heating furnace and immediately cooled by blowing air onto its surface.

Tempering of the glass plate is achieved based on differences in stress between the surface and interior of the glass plate. The tempering of the glass plate is carried out by, for example, repeating a cycle of heating treatment and cooling treatment of the glass plate. The surface on which the composition for forming a silica-based film has been coated according to this mode will tend to have a significantly different coefficient of thermal expansion compared to the interior of the glass plate. Consequently, the glass plate itself may warp during ordinary glass plate tempering treatment. In such cases, the amount of air blown onto the glass plate surface is varied between the side coated with the composition for forming a silica-based film and the side not coated therewith, for different cooling rates on either side to avoid warping and other types of deformation.

More specifically, first the laminated body that is to be subjected to sintering or tempering is transported horizontally by a transport roll into a roller hearth furnace while being heated to a temperature sufficient for tempering of the glass plate, such as 500-600°C. Next, the laminated body removed from the roller hearth furnace is transported through an exit with air suction devices situated facing each other above and below in a cooling chamber. Next, the air (air stream) from the exit with air suction devices is blown onto the laminated body surface for cooling until the temperature of the glass plate falls below the strain point (no higher than 520°C for ordinary soda lime glass, and preferably no higher than 480°C). The temperature of the blown air stream may be, for example, 25-400°C, and the blowing pressure of the air stream may be 0.1-10 kgf/cm$^2$. The air blowing exit and cooling chamber walls preferably have a radiation ratio of no greater than 0.1, by using a material such as mirror-polished SUS304. This can prevent cooling of the glass plate by radiation, thus further facilitate control of the cooling heat transfer coefficient of the glass plate surface by the air stream. If the cooling heat transfer coefficient of the glass plate surface can be increased above normal, it will be possible to accomplish one cycle of heating treatment-cooling treatment in a time period of about 200-900 seconds.

Sintering of the coating film and tempering of the glass plate in the sintering and tempering step described above employs a roller hearth furnace, but the sintering and tempering are not limited to such a method. For example, a gas hearth furnace may be used for heating while transporting the laminated body horizontally, and the laminated body may be cooled immediately after the laminated body has exited from the gas hearth furnace exit port. Alternatively, the laminated body may be heated in a heating furnace while being suspended by a suspending support and the laminated body cooled immediately after the laminated body has exited from the heating furnace exit port.

The tensile stress at the center section of the glass plate and the compression stress at the glass plate surface depend on the difference in temperature (temperature distribution) between the glass plate surface and center when the center section temperature in the glass plate changes across the solidification temperature of the glass (normally 560-570°C for soda lime glass). Thus, the conditions for tempering of the glass plate (the heating temperature, heating time, etc.) are determined based on the desired degree of tempering, i.e. tensile stress and compression stress, of the glass plate.

With this mode it is possible to form an antireflection film with a refractive index of about 1.3, since the starting material of the antireflection film is primarily the composition for forming a silica-based film.

Also, although this mode was explained assuming a glass body in the form of a plate, i.e. a glass plate, the shape of the glass body is not limited to a plate. The glass body shape may be any shape that is suitable for purposes such as optical parts, lenses, prisms, optical disks, camera lenses, eyeglasses, liquid crystal panels, plasma displays, cathode-ray tubes, displays, device meter hoods, solar cells, solar panels (solar cell modules), solar collectors, window glass, vehicle glass and show windows. It may, therefore, be in the form of a lens or cylinder.

The antireflection film of the invention is particularly suitable as an antireflection film to be formed on, especially, solar cell module cover glass, construction glass, automobile glass or display glass.

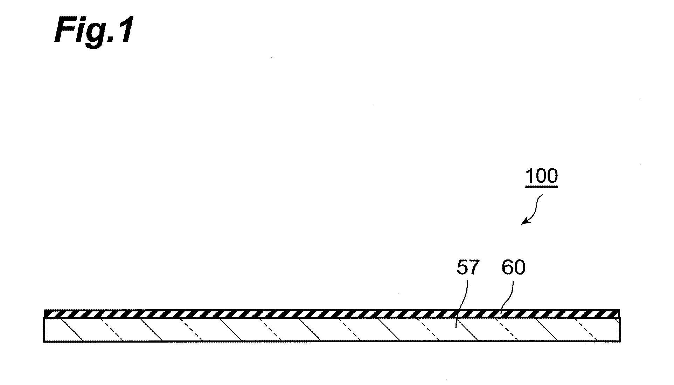

An antireflection film according to this mode and a process for its formation as applied to fabrication of a solar cell module will now be explained with reference to the accompanying drawings. Fig. 1 is a schematic sectional view showing a laminated body obtained by forming an antireflection film according to this mode on whiteboard tempered glass. The laminated body 100 shown in Fig. 1 comprises whiteboard tempered glass 57 and an antireflection film (silica-based film) 60 formed on its surface. The laminated body 100 is fabricated using whiteboard glass as the glass plate in the process of forming the antireflection film. The laminated body is used as a front transparent member for a solar cell module as described hereunder.

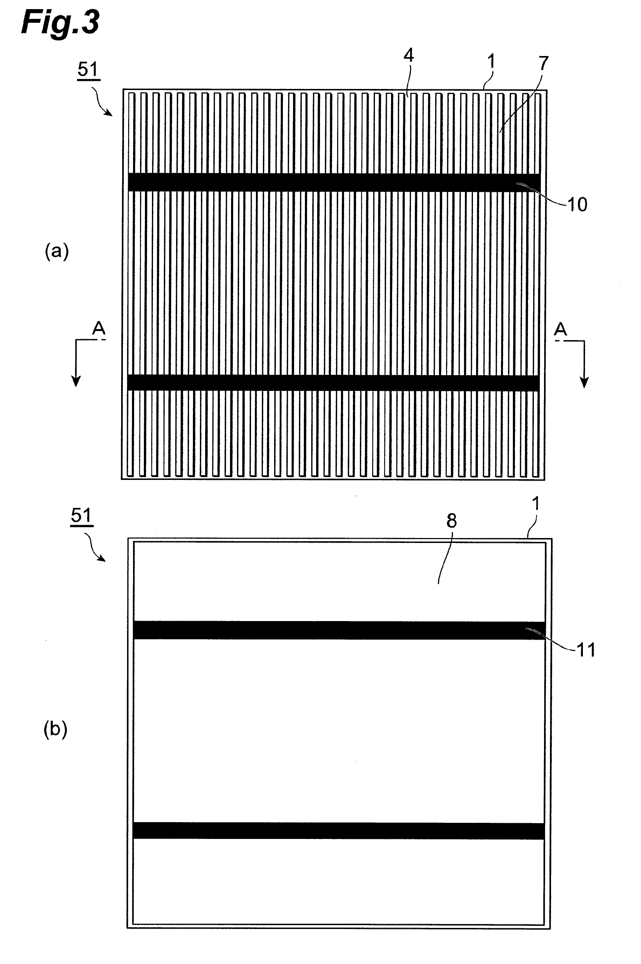

Fig. 3 is a schematic plan view showing the electrode configuration on the front side (a) and rear side (b) of a silicon solar cell for this mode (hereinafter referred to simply as "solar cell"). On the front side (a) of the solar cell there is formed an antireflection film 4 to minimize light reflection and maximize capturing of sunlight on a p-type silicon substrate 1. Also situated on the front side (a) are a front silver electrode (grid electrode) 7 to collect electricity locally generated at the silicon substrate 1, and a front silver electrode (bus electrode) 10 to direct additionally collected electricity to the outside. Because it blocks incident sunlight, the total electrode surface of the front electrode is preferably as small as possible from the viewpoint of improving the generation efficiency. On the front side (a) of the solar cell, therefore, the front silver electrode (grid electrode) 7 is preferably comb-shaped as shown in the drawing, and the front silver electrode (bus electrode) 10 is preferably band-shaped as shown in the drawing. The front electrode material is preferably one composed mainly of silver, from the viewpoint of cost and performance.

A rear aluminum electrode 8 is provided over the entire rear side (b) of the solar cell in order to reduce loss due to electrical resistance created on the rear side, and a rear silver electrode (bus electrode) 11 is provided for collection of electricity. As will be described hereunder, the rear aluminum electrode 8 forms a p+ layer 9 (not shown in Fig. 3) as a BSF (Back Surface Field) layer that improves electrical generation during electrode sintering.

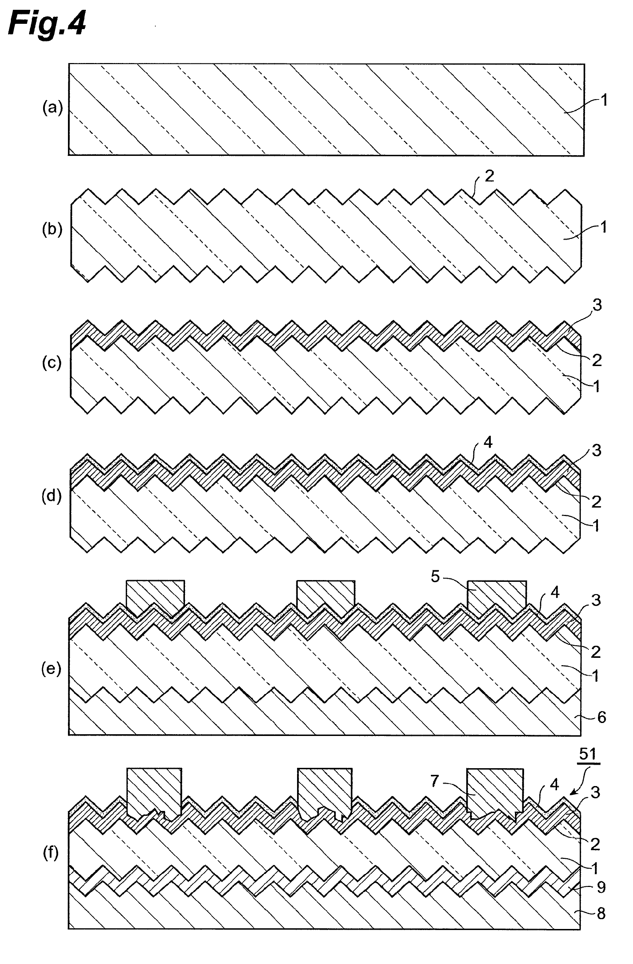

Fig. 4 is a sectional process diagram showing production steps for a silicon solar cell according to this mode. The cross-section shown in (f) corresponds to a portion of a cross-section along line A-A of Fig. 3(a). The currently mass-produced solar cells are generally crystal-type solar cells using polycrystalline silicon substrates or single crystal silicon substrates, and most employ p-type silicon substrates with thicknesses of a few hundred $\mu$m. The following explanation is for an example of a p-type crystal solar cell.

In step Fig. 4 (a), a p-type silicon substrate 1 is prepared.

In step (b), the damage layer on the surface of the silicon substrate 1 which is produced after slicing from a casting ingot is removed to a thickness of about 10-20 $\mu$m using caustic soda or carbonated caustic soda with a concentration of, for example, a few % by mass-20 % by mass. Next, anisotropic etching is carried out with a solution obtained by adding IPA (isopropyl alcohol) to a similar low alkali solution, to form a textured surface 2 so that the (111) planes of the silicon crystals are exposed at the surface.

Next, in step (c), heat treatment is carried out for dozens of minutes at 800-900°C in a mixed gas atmosphere of, for example, phosphorus oxychloride ($POCl_3$), nitrogen and oxygen. Thus, a n-type layer 3 with a uniform thickness is formed on the textured surface 2 on the front side of the silicon substrate 1. The sheet resistance of the n-type layer 3 evenly formed on the textured surface 2 is preferably within the range of 30-80 $\Omega/\square$ to obtain a solar cell with satisfactory electrical characteristics. After the n-type layer has been formed over the entire surface of the silicon substrate 1, the n-type layer 3 alone is left on the front side while the n-type layers formed on the rear side and the sides are selectively removed. For removal of these n-type layers, first a polymer resist paste, for example, is placed over the n-type layer 3 on the front side and dried to form a resist film, so that the n-type layer 3 on the front side is not removed. Next, the silicon substrate 1 on which the n-type layer and resist film have been formed is dipped for several minutes in a 20 % by mass potassium hydroxide solution. The n-type layers formed on the rear and sides are thus removed, after which the resist film is removed with an organic solvent.

In the following step (d), an antireflection film 4 made of a silicon oxide film, silicon nitride film or titanium oxide film is formed on the surface of the n-type layer 3 to a uniform thickness. The antireflection film 4 may be an antireflection film of the invention, but here it will be assumed that a conventional antireflection film is used. When the antireflection film 4 is a conventional silicon oxide film, for example, the film is formed by a plasma CVD process with $SiH_4$ gas and $NH_3$ gas as starting gases, at a temperature of 300°C or above and under reduced pressure. In this case, the refractive index is about 2.0-2.2, and the optimum antireflection film thickness is 70-90 nm. It should be noted that the antireflection film formed in this manner is an insulator and that a solar cell will not function by simply forming a front electrode over this antireflection film.

Next, in step (e), a front electrode silver paste 5 for formation of the grid electrode 7 and bus electrode 10 is applied and dried onto the front side by a screen printing process. In this case, the front electrode silver paste 5 is formed on the antireflection film 4. Next, an aluminum paste 6 for the rear electrode is printed and dried to form a rear aluminum electrode 8 and rear silver electrode 11 on the rear side, similar to the front side. Also, while not shown, a silver paste is also printed and dried for formation of a bus electrode on the rear side.

Finally in step (f), the pastes are fired simultaneously for several minutes at 600°C-900°C. This causes the silver material to contact the silicon and re-solidify while the antireflection film 4 is being melted by the action of the glass material in the silver paste 5 on the front side. As a result, conduction is established between the grid electrode 7 and the n-type layer 3. This process is known as the "fire-through" method. The aluminum paste 6 for the rear electrode forms a rear aluminum electrode 8 as a result of the firing, and reacts with the silicon substrate 1 to form a p+ layer 9 on the silicon substrate 1 side of the rear aluminum electrode 8. A solar cell 51 is thus obtained.

For improved humidity resistance of the silver electrode, the solar cell 51 may be immersed in a lead/tin eutectic solder melt bath at 200-250°C to coat the bus electrode 10 with lead solder.

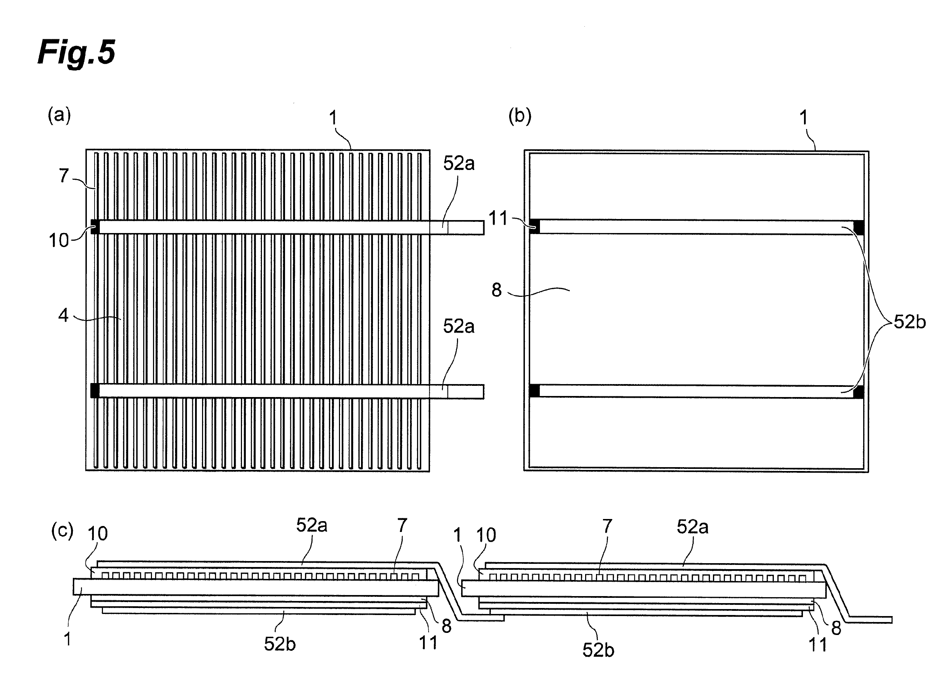

Fig. 5 is a schematic diagram for explanation of a mode for wiring connection between a plurality of solar cells. Fig. 5(a) shows the front side of a single solar cell, (b) shows the rear side of a single solar cell, and (c) shows the front face where wiring connection has been formed between a plurality of solar cells.

In order to achieve connection between a plurality of solar cells 51 obtained in the manner described above, first tab electrodes 52a, 52b are formed by soldering on the front and rear bus electrodes 10, 11. On the front side (a), a tab electrode 52a for the front side is formed by soldering over the entire surface of the front silver electrode (bus electrode) 10. Here the section of the tab electrode 52a that is to be connected to the adjacent solar cell protrudes sideways from the edge of the solar cell. On the rear side (b), a tab electrode 52b for the rear side is formed by soldering over the entire surface of the rear silver electrode (bus electrode) 11. On the rear side (b), unlike the front side (a), the tab electrode 52b does not protrude sideways from the edge of the solar cell.

Common known tab electrodes may be used for connection between a plurality of solar cells, and for example, they may be copper foils coated with solder. The thickness of the copper foil on the tab electrode is about 0.1-0.2 mm, the electrode width is about 1.0-5.0 mm and the solder coating thickness is about 20-40 $\mu$m.

Next, as shown in the front view (c), the tab electrode 52a for the front side that extends out sideways from the edge of one solar cell 51 is soldered to the tab electrode 52b for the rear side of a solar cell 51, for connection between a plurality of solar cells 51. The extended section of the tab electrode 52a for the front side may be bend into a crank-like shape as shown in (c), depending on the desired thickness of the solar cell 51. In this case, the tab electrode 52a for the front side is preferably worked into a crank-like shape before it is soldered to the front silver electrode (bus electrode) 10.

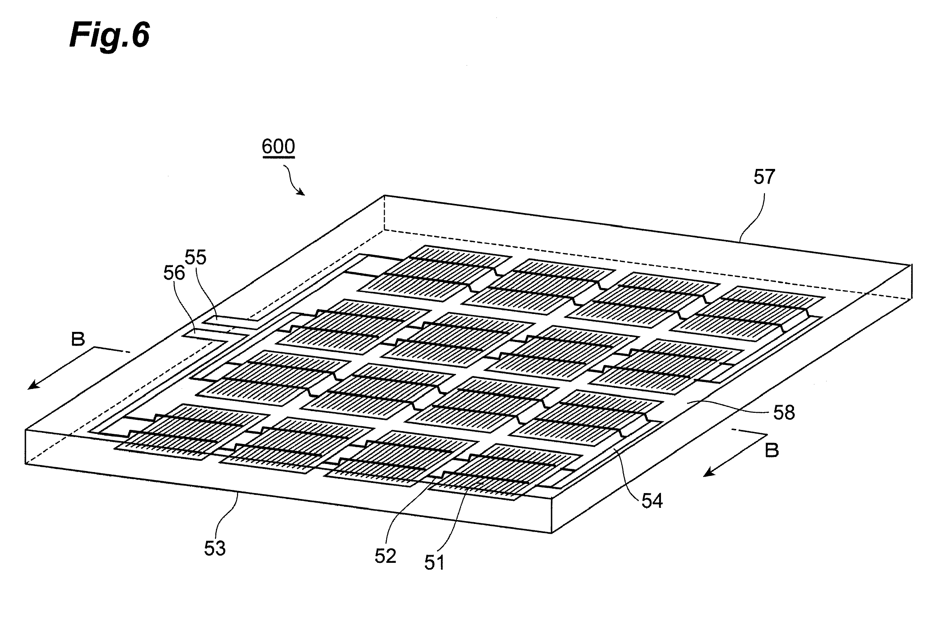

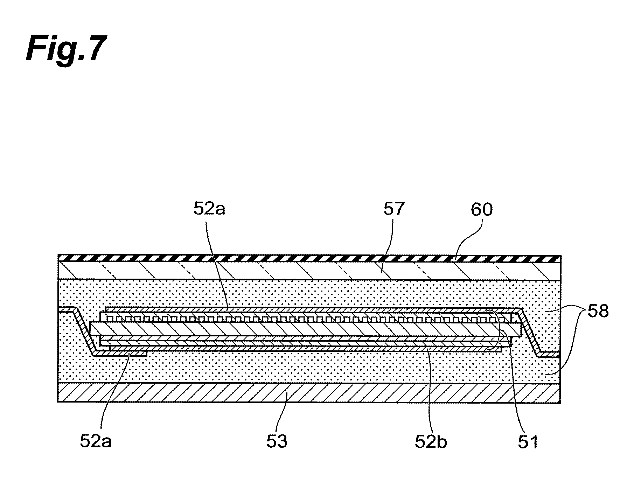

Fig. 6 is an oblique perspective schematic view of a solar cell module fabricated using a plurality of the solar cells 51 shown in Fig. 5. Fig. 7 is a schematic sectional view showing the cross-section of a single solar cell in the cross-section along line B-B of Fig. 6. Interconnection between the solar cells 51 of the solar cell module 600 is such that the receiving side (front side) of the solar cell 51 is the minus electrode, while the rear side is the plus electrode. Therefore when all of the solar cells are connected in series in this module 600, the final construction is such that the plus lead electrode tab 55 of the plus electrode and the minus lead electrode tab 56 of the minus electrode extend out of the module. In Fig. 6, sets of four solar cells are connected in the connection mode shown in the front view (c) of Fig. 5, and the sets of four solar cells are also connected by side tab wirings 54. The connected configuration shown in Fig. 6 with a plurality of solar cells connected together is known as an array.

Since the solar cell module 600 requires long-term reliability, whiteboard tempered glass 57, provided with a function of preventing infiltration of rainwater while allowing penetration of sunlight, and absorbing shocks from falling objects and the like, is situated on the front side of the solar cell array as a front transparent base, as shown in Fig. 6 and Fig. 7. An antireflection film 60 according to the mode described above is further formed over the whiteboard tempered glass 57. The whiteboard tempered glass 57 and antireflection film 60 form the laminated body 100.

The structure has a back sheet 53 with excellent water resistance on the rear side. The back sheet 53 used is preferably a film with a laminated structure wherein a metal foil such as an Al film is sandwiched between ordinary PVF (polyvinyl fluoride) resins. The gap between the solar cell 51 and the whiteboard tempered glass 57 or back sheet 53 is filled by a solar cell sealing material 58. A thermosetting resin with high optical transparency such as EVA (ethylenevinyl acetate) is used as the solar cell sealing material 58. The solar cell sealing material 58 has the function of bonding together the whiteboard tempered glass 57 (laminated body 100), solar cell 51 and back sheet 53, while also filling the gaps.

A process for fabrication of such a solar cell module will now be explained. First, a solar cell sealing material 58 sheet is placed on the side of a laminated body 100 obtained in the manner described above, on the side opposite the antireflection film 60. The solar cells 51 are connected together in an array, and the solar cell sealing material 58 sheet and back sheet 53 are then stacked over the solar cells 51 in an array in that order. The stacked body is heated to about 150°C and then laminated in a deaerating step so that the solar cell sealing material 58 almost completely fills the gaps, to obtain a solar cell module 600 having the construction shown in Figs. 6 and 7.

The invention, is not limited to the preferred modes described above, however.

Examples

(Preparation Example 1)

First, 1.3 g of a 2.38% tetramethylammonium nitrate aqueous solution (pH = 3.6) was added to a solution of 515.5 g of tetraethoxysilane and 402.0 g of methyltriethoxysilane dissolved in 1854.5 g of diethyleneglycol dimethyl ether. Next, 271.7 g of nitric acid adjusted to 0.644 % by mass was added dropwise over a period of 30 minutes while stirring. Upon completion of the dropwise addition followed by reaction for 3 hours, a portion of the ethanol and diethyleneglycol dimethyl ether products in the warm bath was distilled off under reduced pressure to obtain 1681.9 g of a concentrated polysiloxane solution. To 1681.9 g of this polysiloxane solution there were added 128.7 g of diethyleneglycol dimethyl ether, 88.1 g of polypropylene glycol (trade name "PPG725" by Aldrich Co.) and 100.0 g of ethanol, and the mixture was stirred to dissolution for 30 minutes at room temperature (25°C) to obtain a polysiloxane solution as a composition for forming a silica-based film. The weight-average molecular weight of the polysiloxane was measured by GPC to be 870.

(Preparation Example 2)

After first loading in 137.5 g of tetraethoxysilane and 107.2 g of methyltriethoxysilane, there was further added 483.9 g of diethyleneglycol dimethyl ether and the mixture was dissolved while stirring at a speed of 200 rpm at ordinary temperature. An aqueous solution of 0.47 g of 60% nitric acid in 71.98 g of water was further added dropwise over a period of 30 minutes while stirring. Upon completion of the dropwise addition, the reaction was conducted for 3 hours to obtain a polysiloxane solution. The polysiloxane solution was placed in a warm bath at 75-85°C under reduced pressure, and a portion of the ethanol product and diethyleneglycol dimethyl ether solvent was distilled off from the polysiloxane solution to obtain 530.1 g of a concentrated polysiloxane solution. The weight-average molecular weight of the polysiloxane was measured by GPC to be 1110. The 350°C weight reduction of the polypropylene glycol used as the void-forming agent was 99.9%.

Next, 464.4 g of the concentrated polysiloxane solution, as well as 20.34 g of polypropylene glycol (trade name "PPG725" by Aldrich Co.) as the void-forming agent, 396.1 g of diethyleneglycol dimethyl ether, 14.6 g of a 2.38% tetramethylammonium nitrate aqueous solution (pH = 3.6) and 4.5 g of a 1% diluted maleic acid aqueous solution were added and the mixture was dissolved while stirring for 30 minutes at room temperature (25°C) to obtain a composition for forming a silica-based film. The 350°C weight reduction of the polypropylene glycol used as the void-forming agent was 99.9%.

(Preparation Example 3)

First, to a solution of 154.6 g of tetraethoxysilane and 120.6 g of methyltriethoxysilane dissolved in 543.3 g of cyclohexanone there was added a solution of 0.525 g of 70% nitric acid in 80.98 g of water dropwise over a period of 30 minutes while stirring. Upon completion of the dropwise addition followed by reaction for 5 hours, a portion of the ethanol and cyclohexanone products in the warm bath was distilled off under reduced pressure to obtain 583.7 g of a concentrated polysiloxane solution. The weight-average molecular weight of the polysiloxane was measured by GPC to be 1350.

Next, 553.9 g of the concentrated polysiloxane solution, as well as 24.86 g of polypropylene glycol (trade name "PPG725" by Aldrich Co.) as the void-forming agent, 498.7 g of cyclohexanone, 17.89 g of a 2.38% tetramethylammonium nitrate aqueous solution (pH = 3.6) and 5.5 g of a 1% diluted maleic acid aqueous solution were added and the mixture was dissolved while stirring for 30 minutes at room temperature (25°C) to obtain a composition for forming a silica-based film. The 350°C weight reduction of the polypropylene glycol used as the void-forming agent was 99.9%.

[Production of antireflection films]

(Examples 1-3)

Each of the composition for forming a silica-based film obtained in Preparation Examples 1-3 was adjusted to a concentration to produce a coating film which has a film thickness of 175 ±10 nm after the hardening. Next, each of the composition for forming a silica-based film s was spray coated onto a silicon wafer and whiteboard glass to obtain a laminated body comprising a coating film formed on the silicon wafer or whiteboard glass. Each obtained laminated body was heated with a hot plate at 250°C for 3 minutes to remove the solvent in the coating film, and then placed in a quartz tube furnace preadjusted to 630°C and allowed to stand in the furnace for 30 minutes. The laminated body was then removed from the quartz tube furnace and compressed air at room temperature was blown onto it for cooling. Laminated bodies were thus obtained having antireflection films formed on silicon wafers or whiteboard tempered glass. The laminated bodies or antireflection films were used as Examples 1-3, corresponding to the composition for forming silica-based films of Preparation Examples 1-3.

[Evaluation of antireflection films]

The antireflection films formed on the silicon wafers were used for measurement of the refractive index at 634 nm using an ellipsometer. The results are shown in Table 1.
[Table 1]

|  | Example 1 | Example 2 | Example 3 |
|---|---|---|---|
| Refractive index | 1.289 | 1.302 | 1.321 |

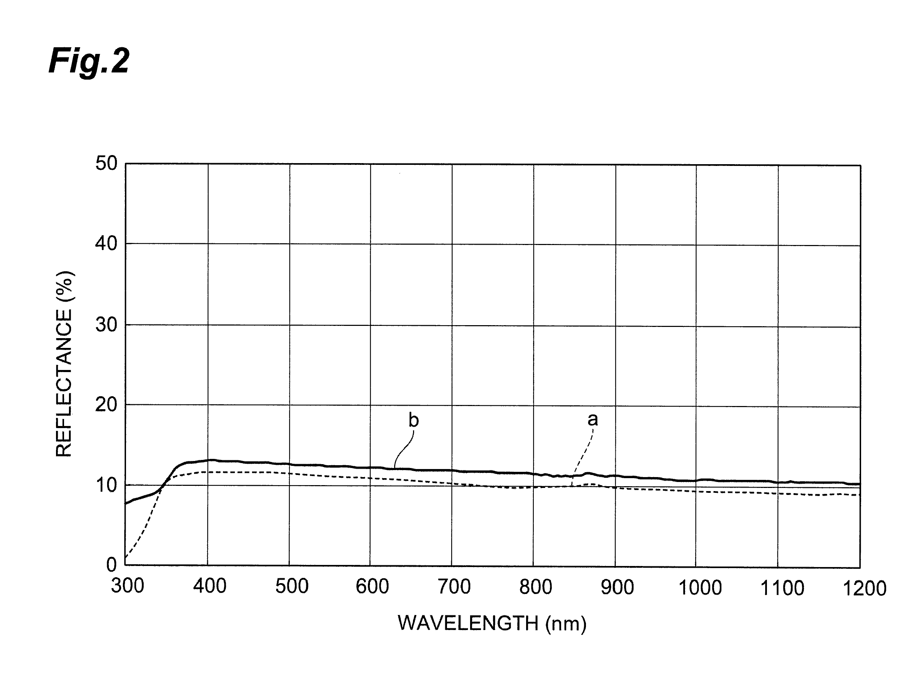

An ellipsometer was also used for measurement of the wavelength dependency of reflectance of the antireflection film of Example 1 formed on the whiteboard tempered glass in the same manner as the laminated body 100 of Fig. 1, with irradiation of light from the same side of the laminated body 100 as the antireflection film 60 side. The results are shown in Fig. 2. The broken line (a) represents the reflectance of the laminated body 100, and the solid line (b) represents the reflectance of the whiteboard tempered glass 57 alone. According to Fig. 2, a silicon-based solar cell with an antireflection film 60 formed on whiteboard tempered glass 57 has a reflectance of about 1% lower than one with only whiteboard tempered glass 57, across the total wavelength range of sensitivity.

[Evaluation of solar cell (module)]

The laminated body of Example 1 (antireflection film/whiteboard tempered glass) was used to fabricate a solar cell module similar to the one shown in Fig. 7, in the same manner described above. A solar cell module was fabricated in the same manner as Example 1, except that only whiteboard tempered glass (solar cell cover glass, product of Asahi Glass Co., Ltd.) was used, instead of a laminated body (antireflection film/whiteboard tempered glass), as the solar cell module in Comparative Example 1. These solar cell modules were used for measurement of the open voltage (Voc), current density (Jsc), fill factor (FF) and conversion efficiency (Eff). The results are shown in Table 2.
[Table 2]

|  | Example 1 | Comparative Example 1 |
|---|---|---|
| Voc (V) | 0.605 | 0.606 |
| Jsc (mA/cm$^2$) | 33.78 | 34.43 |
| FF | 0.766 | 0.765 |
| Eff(%) | 15.65 | 15.96 |

It was demonstrated that forming an antireflection film (silica-based film) according to the invention increased the current density by about 0.65 mA/cm$^2$ and improved the conversion efficiency (Eff) by 0.3% by absolute judgment, compared to one without formation of an antireflection film. This matched the results shown in Fig. 2.

(Example 4)

After dropping the composition for forming a silica-based film obtained in Preparation Example 2 onto whiteboard glass, it was spin coated with a spinner under the conditions described below to obtain a laminated body with the coating film formed on the whiteboard glass. The spinning conditions were as follows: Prespin = 1000 rpm, 10 seconds, Main spin = 2000 rpm, 30 seconds.

Laminated bodies obtained in this manner were heated for 5 minutes with a hot plate at 250°C to remove the solvent in the coating film. Next, the solvent-removed laminated bodies were placed in a vertical diffusion furnace for semiconductor production (trade name: "μ-TF" by Koyo Thermo Systems Co., Ltd.) with furnace temperatures adjusted to 500°C, 600°C and 700°C, and allowed to stand in the furnace for 3 minutes. After standing, each laminated body was removed from the vertical diffusion furnace for semiconductor production and compressed air at room temperature was blown onto it for cooling. Laminated bodies were thus obtained having antireflection films formed on whiteboard tempered glass.

Heating with the diffusion furnace was carried out in the following manner. First, a movable stage with capping function of a furnace was raised to close the furnace. Next, the furnace was heated to the prescribed temperature while closed. For preparation, a semiconductor silicon wafer was loaded into a quartz holder and the laminated body was placed thereover. When the furnace reached the prescribed temperature, the movable stage was lowered and the prepared quartz holder was quickly placed on the movable stage. The movable stage was then again raised to close the furnace. After holding for 3 minutes in this state, the movable stage was lowered and the laminated body was removed out of the furnace.

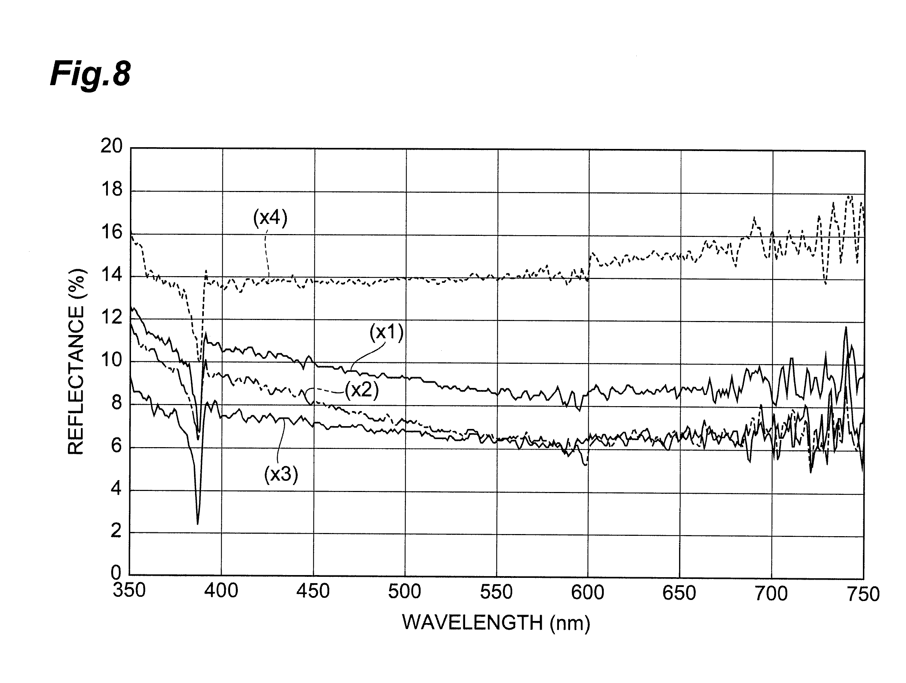

An ellipsometer was also used for measurement of the wavelength dependency of reflectance for the laminated bodies having antireflection films formed on whiteboard tempered glass by heating at the different furnace temperatures, with irradiation of light from the antireflection film side. The results are shown in Fig. 8. In this graph, (x1), (x2) and (x3) represent heating at furnace temperatures of 500°C, 600°C and 700°C, respectively. Also, (x4) represents the whiteboard tempered glass alone (solar cell cover glass by Asahi Glass Co., Ltd.). As seen in Fig. 8, a silicon-based solar cell with an antireflection film formed on whiteboard tempered glass has a lower reflectance than one with only whiteboard tempered glass, across the total wavelength range of sensitivity.

(Example 5)

After dropping the composition for forming a silica-based film obtained in Preparation Example 2 onto whiteboard glass, it was spin coated with a spinner under the conditions described below to obtain a laminated body having the coating film formed on the whiteboard glass. The spinning conditions were as follows: Prespin = 1000 rpm, 10 seconds, Main spin = 2000 rpm, 30 seconds.

Laminated bodies obtained in this manner were heated for 5 minutes with a hot plate at 250°C to remove the solvent in the coating film. Next, the solvent-removed laminated bodies were loaded into the vertical diffusion furnace for semiconductor production with the furnace at room temperature, and the temperature was increased to a prescribed temperature (300°C, 400°C, 500°C or 600°C), for standing in the furnace at that temperature for 10 minutes. After standing, each laminated body was removed from the vertical diffusion furnace for semiconductor production and compressed air at room temperature was blown onto it for cooling. Laminated bodies were thus obtained having antireflection films formed on whiteboard tempered glass.

The heating was carried out in the following manner. A semiconductor silicon wafer was loaded into a quartz holder and the laminated body was placed thereover. Next the quartz holder with the laminated body was placed on a movable stage having a furnace capping function. The movable stage was then raised to close the furnace. The furnace temperature was then increased from room temperature to the prescribed temperature over a period of 20 minutes, the temperature was maintained for 10 minutes, and then the furnace temperature was lowered to about 200°C over a period of 20 minutes. The movable stage was lowered and the laminated body was removed out of the furnace.

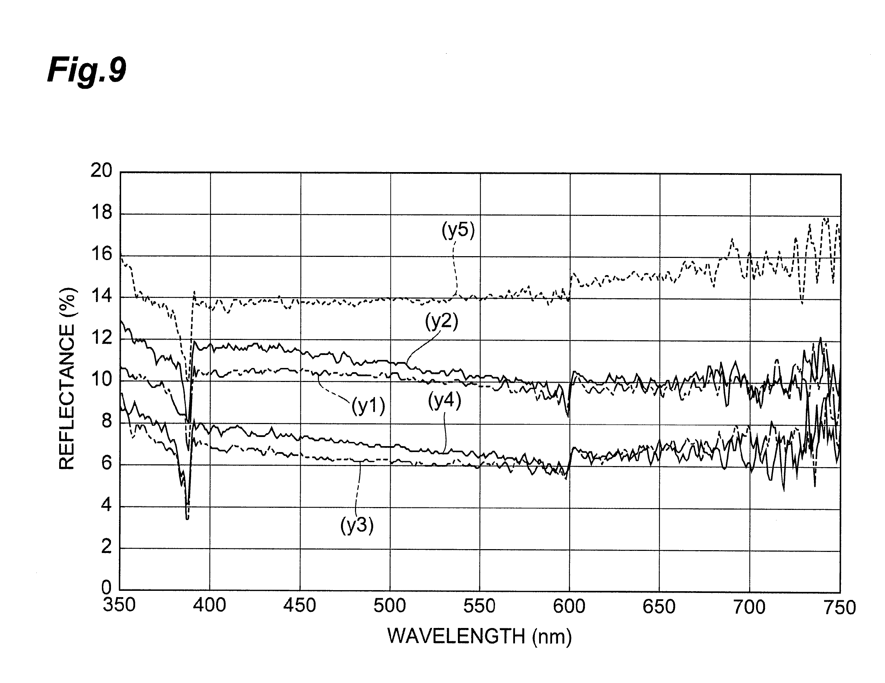

An ellipsometer was also used for measurement of the wavelength dependency of reflectance for the laminated bodies having antireflection films formed on whiteboard tempered glass by heating at the different furnace temperatures, with irradiation of light from the antireflection film side. The results are shown in Fig. 9. In this graph, (y1), (y2), (y3) and (y4) represent heating at furnace temperatures of 300°C, 400°C, 500°C and 600°C, respectively. Also, (y5) represents the whiteboard tempered glass alone (solar cell cover glass by Asahi Glass Co., Ltd.). As seen in Fig. 9, a silicon-based solar cell with an antireflection film formed on whiteboard tempered glass has a lower reflectance than one with only whiteboard tempered glass, across the total wavelength range of sensitivity.

(Example 6)

After dropping the composition for forming a silica-based film obtained in Preparation Example 3 onto whiteboard glass, it was spin coated with a spinner under the conditions described below to obtain a laminated body having the coating film formed on the whiteboard glass. The spinning conditions were as follows: Prespin = 1000 rpm, 10 seconds, Main spin = 2000 rpm, 30 seconds.

Laminated bodies obtained in this manner were heated for 5 minutes with a hot plate at 250°C to remove the solvent in the coating film. Next, the solvent-removed laminated bodies were each placed in a vertical diffusion furnace for semiconductor production (trade name: "μ-TF" by Koyo Thermo Systems Co., Ltd.) with furnace temperatures adjusted to 500°C, 600°C and 700°C, and allowed to stand in the furnace for 3 minutes. After standing, each laminated body was removed from the vertical diffusion furnace for semiconductor production and compressed air at room temperature was blown onto it for cooling. Laminated bodies were thus obtained having antireflection films formed on whiteboard tempered glass.

Heating with the diffusion furnace was carried out in the following manner. First, a movable stage with a furnace capping function was raised to close the furnace. Next, the furnace was heated to the prescribed temperature while closed. For preparation, a semiconductor silicon wafer was loaded into a quartz holder and the laminated body was placed thereover. When the furnace reached the prescribed temperature, the movable stage was lowered and the prepared quartz holder was quickly placed on the movable stage. The movable stage was then again raised to close the furnace. After holding for 3 minutes in this state, the movable stage was lowered and the laminated body was removed out of the furnace.

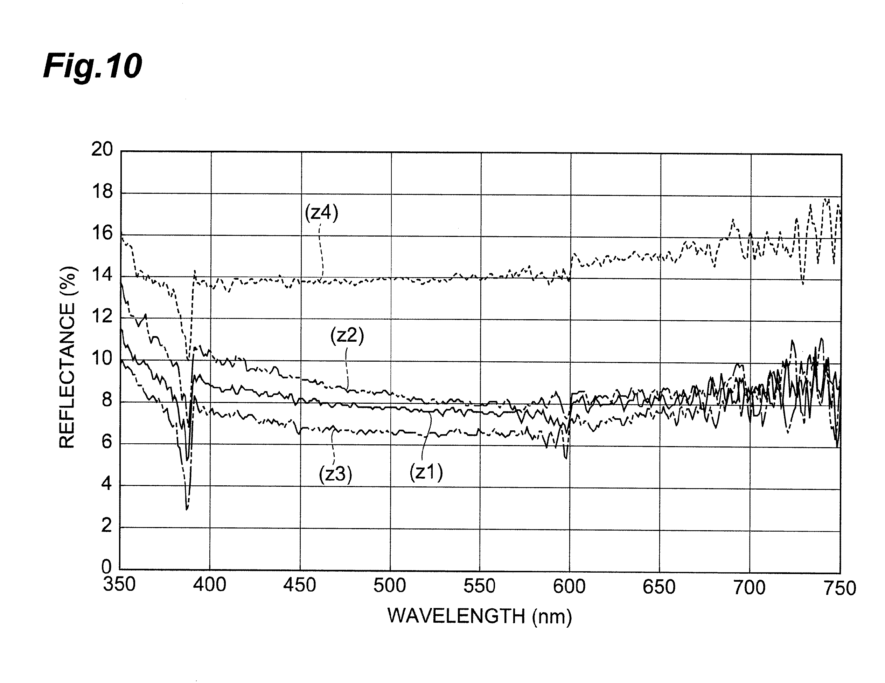

An ellipsometer was also used for measurement of the wavelength dependency of reflectance for the laminated bodies having antireflection films formed on whiteboard tempered glass by heating at the different furnace temperatures, with irradiation of light from the antireflection film side. The results are shown in Fig. 10. In this graph, (z1), (z2) and (z3) represent heating at furnace temperatures of 500°C, 600°C and 700°C, respectively. Also, (z4) represents the whiteboard tempered glass alone (solar cell cover glass by Asahi Glass Co., Ltd.). As seen in Fig. 10, a silicon-based solar cell with an antireflection film formed on whiteboard tempered glass has a lower reflectance than one with only whiteboard tempered glass, across the total wavelength range of sensitivity.

(Example 7)

After dropping the composition for forming a silica-based film obtained in Preparation Example 3 onto whiteboard glass, it was spin coated with a spinner under the conditions described below to obtain a laminated body having the coating film formed on the whiteboard glass. The spinning conditions were as follows: Prespin = 1000 rpm, 10 seconds, Main spin = 2000 rpm, 30 seconds.

Laminated bodies obtained in this manner were heated for 5 minutes with a hot plate at 250°C to remove the solvent in the coating film. Next, the solvent-removed laminated bodies were loaded into the vertical diffusion furnace for semiconductor production with the furnace at room temperature, and the temperature was increased to prescribed temperatures (300°C, 400°C, 500°C or 600°C), for standing in the furnace at that temperature for 10 minutes. After standing, each laminated body was removed from the vertical diffusion furnace for semiconductor production and compressed air at room temperature was blown onto it for cooling. Laminated bodies were thus obtained having antireflection films formed on whiteboard tempered glass.

The heating was carried out in the following manner. A semiconductor silicon wafer was loaded into a quartz holder and the laminated body was placed thereover. Next the quartz holder with the laminated body was placed on a movable stage having a furnace capping function. The movable stage was then raised to close the furnace. The furnace temperature was then increased from room temperature to the prescribed temperature over a period of 20 minutes, the temperature was maintained for 10 minutes, and then the furnace temperature was lowered to about 200°C over a period of 20 minutes. The movable stage was lowered and the laminated body was removed out of the furnace.

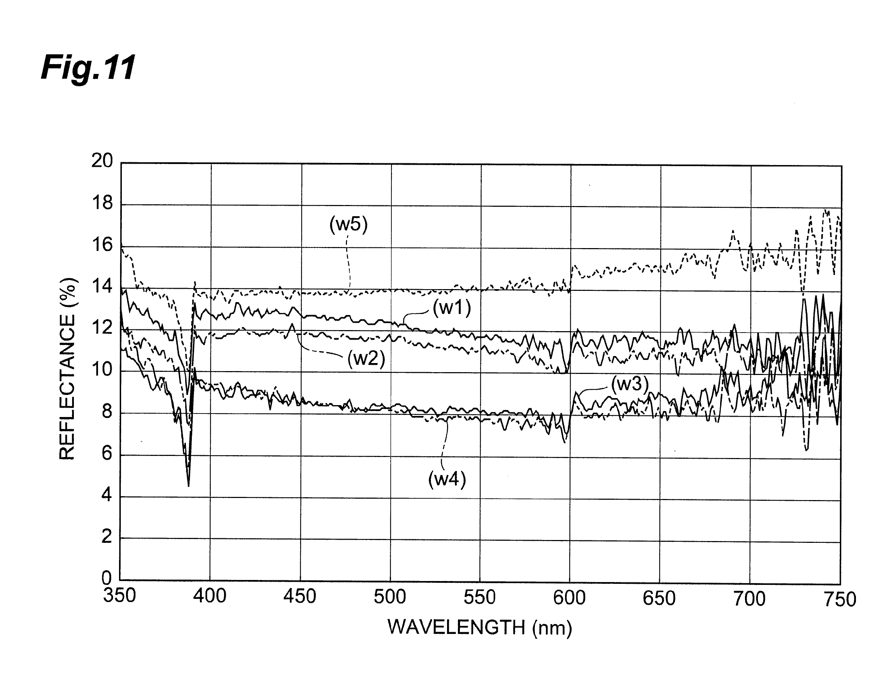

An ellipsometer was also used for measurement of the wavelength dependency of reflectance for the laminated bodies having antireflection films formed on whiteboard tempered glass by heating at the different furnace temperatures, with irradiation of light from the antireflection film side. The results are shown in Fig. 11. In this graph, (w1), (w2), (w3) and (w4) represent heating at furnace temperatures of 300°C, 400°C, 500°C and 600°C, respectively. Also, (w5) represents the whiteboard tempered glass alone (solar cell cover glass by Asahi Glass Co., Ltd.). As seen in Fig. 11, a silicon-based solar cell with an antireflection film formed on whiteboard tempered glass has a lower reflectance than one with only whiteboard tempered glass, across the total wavelength range of sensitivity.

**Industrial Applicability**

According to the invention it is possible to provide a method for forming antireflection films that allows antireflection films to be formed at satisfactorily low cost.

**Claims**

1. A method for forming an antireflection film comprising a step that simultaneously accomplishes sintering of a coating film containing an antireflection film precursor formed on the surface of a glass body, and tempering of the glass body.

2. A method for forming an antireflection film according to claim 1, wherein the sintering and tempering are carried out at 300-800°C.

3. A method for forming an antireflection film according to claim 1 or 2, wherein the antireflection film is a silica-based film.

4. A method for forming an antireflection film according to claim 1 or 2, wherein the antireflection film is a porous silica-based film.

5. A method for forming an antireflection film according to claim 3 or 4, wherein a composition for forming a silica-based film containing:

   component (a): a siloxane resin,
   component (b): a solvent capable of dissolving component (a), and
   component (c): an hardening accelerator catalyst,

   is coated and dried on the surface of the glass body.

# Fig.1

100

57  60

Fig.2

# *Fig.3*

(a)

(b)

# *Fig.4*

(a)

1

(b)

2

1

(c)

3

2

1

(d)

4

3

2

1

(e)

5

4

3

2

1

6

(f)

51

7

4

3

2

1

9

8

# Fig.5

(a)

(b)

(c)

EP 1 890 172 A1

**Fig.6**

# Fig.7

*Fig.8*

# Fig.9

EP 1 890 172 A1

Fig.10

# Fig.11

**INTERNATIONAL SEARCH REPORT**

| International application No. |
| --- |
| PCT/JP2006/311598 |

A. CLASSIFICATION OF SUBJECT MATTER
*G02B1/11*(2006.01)i, *G09F9/00*(2006.01)i

According to International Patent Classification (IPC) or to both national classification and IPC

B. FIELDS SEARCHED

Minimum documentation searched (classification system followed by classification symbols)
G02B1/11, G09F9/00

Documentation searched other than minimum documentation to the extent that such documents are included in the fields searched
Jitsuyo Shinan Koho        1922-1996     Jitsuyo Shinan Toroku Koho    1996-2006
Kokai Jitsuyo Shinan Koho   1971-2006     Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2005-99693 A  (Hitachi Chemical Co., Ltd.), 14 April, 2005 (14.04.05), Full text; all drawings (Family: none) | 1-5 |
| Y | JP 9-30836 A  (Central Glass Co., Ltd., Fuji Shikiso Kabushiki Kaisha), 04 February, 1997 (04.02.97), Claim 14 (Family: none) | 1-5 |
| Y | WO 2002/0053369 A1  (Asahi Glass Co., Ltd.), 11 July, 2002 (11.07.02), Page 7, lines 10 to 12 (Family: none) | 1-5 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08 September, 2006 (08.09.06) | 19 September, 2006 (19.09.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

## REFERENCES CITED IN THE DESCRIPTION

**Patent documents cited in the description**

- JP 58116507 A
- JP 62226840 A
- JP 1312501 A
- JP 3199043 A
- JP 5157902 A
- JP 63501 A

- JP 6157076 A
- JP 7140303 A
- JP 7150356 A
- JP 7333403 A
- JP 9249411 A
- JP 2000147750 A